# EUROPEAN PATENT SPECIFICATION

(11) **EP 2 230 282 B1**
(45) Date of publication and mention of the grant of the patent: **09.05.2012**
(21) Application number: 10002778.8
(22) Date of filing: 16.03.2010
(51) Int. Cl.: C09D 11/00, C09B 33/12

(54) **Oil-based inkjet recording ink**
Tintenstrahltinte auf Ölbasis
Encre d'enregistrement à jet d'encre à base d'huile

(30) Priority: 19.03.2009 JP 2009068821
(43) Date of publication of application: 22.09.2010
(73) Proprietor: FUJIFILM Corporation, Minato-ku Tokyo (JP)
(72) Inventor: Yamamoto, Hiroshi, Ashigarakami-gun Kanagawa (JP)
(74) Representative: HOFFMANN EITLE

(56) References cited:
- EP-A1- 1 352 932
- EP-A1- 2 154 209
- EP-A1- 2 223 977
- EP-A1- 2 223 978
- WO-A1-2009/110643
- WO-A2-2009/005137

## Description

### BACKGROUND OF THE INVENTION

### Field of the Invention

The present invention relates to oil-based inkjet recording ink containing an azo pigment.

### Related Art

An inkjet recording system is a system for recording by ejecting liquid ink from a nozzle onto a recording medium with pressure, heat or an electric field as the driving source. Since the system islow in running cost and capable of realization of high image quality, such an inkjet recording system has swiftly prevailed not only in offices but also in homes in recent years.

As the inkjet recording ink, aqueous dye inks obtained by dissolving a water-soluble dye in an aqueous medium are widely used for the reason that such inks are high in coloring ability or low in clogging at a head orifice. However, the aqueous dye inks have a problem such that they are not sufficient in waterproofness and weather resistance.

On the other hand, large-sized inkjet printers capable of coping with even an A-0 size have been developed recently, and a mode of use in outdoor applications such as posters for the outdoors has increased. Further, uses for long term storage have also increased due to the spread of digital cameras. Under these circumstances, development of pigment inks excellent in waterproofness and weather resistance has been extensively carried out.

Among pigment inks, aqueous pigment inks containing water as a solvent have been widely used in recent years centering on inkjet printer use for consumers from the standpoints of safety and easiness of handling. Above all, in aqueous pigment inks for inkjet recording, azo-based pigments such as C.I. Pigment Yellow 74 and the like are used as yellow pigment for the reason that they are preferred from the viewpoint of hue (for example, refer to Japanese Patent Application Laid-Open (JP-A) No. 2000-239594 (the term "JP-A" as used herein means an "unexamined published Japanese patent application")).

When aqueous pigment inks are used, cockling (a phenomenon of undulation of paper) occurs in recording on plain paper. Further, many recording media sold for use with aqueous inks are insufficient in waterproofness, and ordinarily used pigments such as C.I. Pigment Yellow 74 and the like are conspicuously inferior from the standpoint of light fastness, so that they are not suitable for outdoor use unless special process such as lamination is performed.

Contrary to this, when oil-based pigment inks using an organic solvent as the solvent are used, recording may be carried out without being accompanied by cockling even when plain paper and mat coat paper are used, and recording is possible on wide range of media such as vinyl chloride resin films and the like. Further, oil-based pigment inks using an organic solvent are excellent in waterproofness of recorded matter as compared with aqueous pigment inks. Azo metal complexes of yellow pigments generally used in oil-based pigment inks for inkjet recording (C.I. Pigment Yellow 150 and the like) are excellent in light fastness, and recorded matter that is recorded on media exclusively for outdoor use can be used outdoors without performing lamination processing.

In conventional oil-based pigment inks, aromatic hydrocarbons, e.g., toluene, xylene, etc., aliphatic hydrocarbons, e.g., hexane, kerosene, etc., ketones, e.g., methyl ethyl ketone, etc., esters, e.g., ethyl acetate, etc., and propylene glycol monomethyl ether acetate, etc., are generally used as organic solvents.

As examples of oil-based pigment inks, those using, as the main solvents of the oil-based pigment inks, hydrocarbons having great molecular weights in aliphatic hydrocarbons or mixed solvents of aliphatic hydrocarbons and long chain alcohols, such as solvent-based pigment inks for inkjet printers using pigments, and oleyl alcohols as the dispersion media (for example, refer to JP-A No. 2000-38533), and solvent-based inkjet inks containing pigments, and solvents, e.g., n-paraffins, isoparaffins, or mixtures thereof as the dispersion media (for example, refer to JP-A No. 2001-329193) are disclosed.

### SUMMARY OF THE INVENTION

However, when recording is performed with conventional oil-based pigment inks described above using generally used organic solvents such as aliphatic hydrocarbons, ketones, esters, or the like, if a polyvinyl chloride base material is used as a recording medium, satisfactory image quality and drying property of the image part cannot be obtained. In particular, although yellow pigments including azo metal complexes such as azomethine Ni complex pigment containing a heavy metal such as Ni or the like as described above (e.g., C.I. Pigment Yellow 150) are excellent in light fastness, they are inferior in dispersibility and subsequent stability when they are dispersed. Accordingly, it is difficult to obtain stable ink performance, ejecting ability, and re-ejecting ability after termination of ejection (recoverability of ejection), and ink adhesion is not good when recording is performed on a resin medium such as polyvinyl chloride.

It is thought that in connection with the pigment inks described in JP-A Nos. 2000-38533 and 2001-329193 using hydrocarbons having greater molecular weights as the main solvents of the oil-based pigment inks, the flash temperature is high and dangerousness of flash ignition is low, and cockling can be lowered to a certain degree, but ink adhesion of the recorded matters is not sufficient and the ink is liable to be scraped off.

Further, when the boiling temperature and the flash temperature of an organic solvent are low, nozzles are generally liable to be clogged due to swiftness of drying and the like. In connection with oil-based inks, it is desired that the specifications of printers are not expensive from the points of dissolution and swelling of plastics used in apparatus and parts such as ink storing containers and printers (e.g., polystyrene resin, ABS resin, etc.). From these points, even when organic solvents are used as the solvents, oil-based pigment inks using organic solvents are useful as recording materials by the improvement of attention for handling such as dangerousness of flash ignition or the like and installation of exhauster.

The present invention has been done in the light of the above circumstances. The object of the invention is to provide an oil-based inkjet recording ink having recording property onto a polyvinyl chloride base material and excellent in stability and ejecting ability of ink (including re-ejecting ability after a halt of ejection).

### DETAILED DESCRIPTION OF THE INVENTION

The objects to solve the problems may be achieved by items <1> to <13> shown below.
<1> An oil-based inkjet recording ink having a water content of 1% by mass or less comprising an azo pigment represented by the following Formula (1), a polymer dispersant, a resin, and 50% by mass or more of an organic solvent: 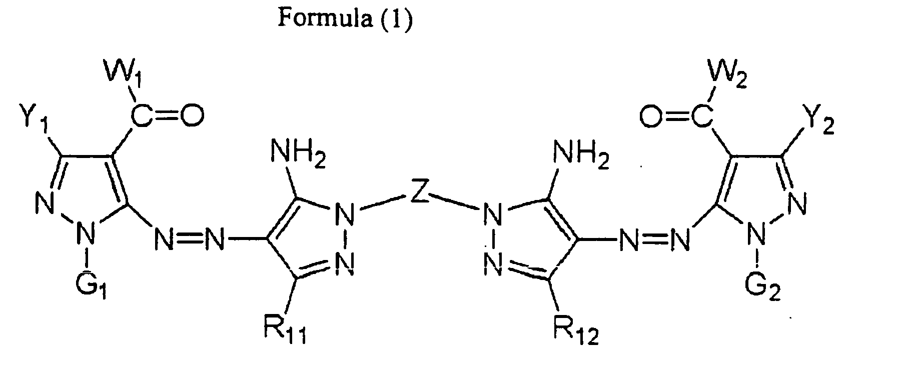 wherein, in Formula (1). Z represents a divalent group derived from a 5- to 8-membered heterocycle containing nitrogen atom(s); Y₁, Y₂, R₁₁, and R₁₂ each independently represent a hydrogen atom or a substituent; G₁ and G₂ each independently represent a hydrogen atom, an alkyl group, an aralkyl group, an alkenyl group, an alkynyl group, an aryl group or a heterocyclic group; and W₁ and W₂ each independently represent an alkoxy group, an amino group, a substituted amino group, an alkyl group or an aryl group.

<2> The oil-based inkjet recording ink of the item <1>, wherein, in Formula (1), W₁ and W₂ each independently represent an alkoxy group having 3 or less carbon atoms, an amino group, or an alkylamino group having 3 or less carbon atoms.
<3> The oil-based inkjet recording ink of the item <1> or the item <2>, wherein, in Formula (1), G₁ and G₂ each independently represent an alkyl group having 3 or less carbon atoms.
<4> The oil-based inkjet recording ink of any one of items <1> to <3>, wherein, in Formula (1), Z represents a divalent group derived from a 6-membered heterocycle containing nitrogen atom(s).

<5> The oil-based inkjet recording ink of any one of items <1> to <4>, wherein, the azo pigment represented by Formula (1) is an azo pigment represented by the following Formula (2). 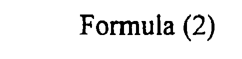 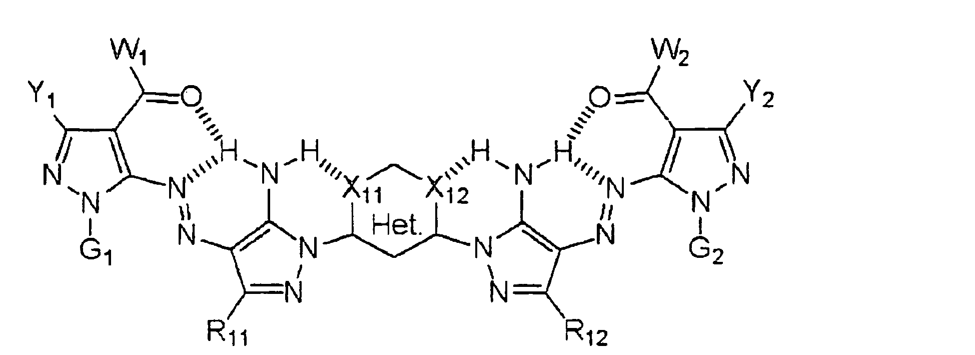 In Formula (2), Y₁, Y₂, R₁₁, and R₁₂ each independently represent a hydrogen atom or a substituent; G₁ and G₂ each independently represent a hydrogen atom, an alkyl group, an aralkyl group, an alkenyl group, an alkynyl group, an aryl group or a heterocyclic group; and W₁ and W₂ each independently represent an alkoxy group, an amino group, a substituted amino group, alkyl group or an aryl group; and X₁₁ and X₁₂ each independently represent a heteroatom in a divalent group (Het.) derived from a nitrogen-containing heterocyclic compound represented by Z in Formula (1).

<6> The oil-based inkjet recording ink of any one of items <1> to <5>, wherein the polymer dispersant includes a hydrophobic group in a molecule and is insoluble in water.

<7> The oil-based inkjet recording ink of any one of items <1> to <6>, wherein at least one of the organic solvent is one selected from the group consisting of a polyoxyethylene glycol dialkyl ether represented by the following Formula (α); a polyoxyethylene glycol monoalkyl ether represented by the following Formula (β); a polyoxypropylene glycol monoalkyl ether represented by the following Formula (γ); a triethyl citrate; a hydrocarbon based solvent; and a lactone based solvent,

   Formula (α): R²¹-(OC₂H⁴)ₗ-OR²²,

   wherein, in Formula (α), R²¹ and R²² each independently represent an alkyl group having 1 to 3 carbon atoms and may be the same or different from each other; and 1 denotes an integer of 2 to 4,

   Formula (β): R³¹-(OC₂H₄)ₘ-OH,

   wherein, in Formula (β), R³¹ represents an alkyl group having 1 to 6 carbon atoms, and m denotes an integer of 3 to 6, and

   Formula (γ): R⁴¹-(OC₃H₆)ₙ-OH,

   wherein, in Formula (γ), R⁴¹ represents an alkyl group having 1 to 4 carbon atoms, and n denotes an integer of 2 to 3.

<8> The oil-based inkjet recording ink of the item <7>, wherein at least one of the organic solvent is a polyoxyethylene glycol dialkyl ether represented by the following Formula (α):

   Formula (α): R²¹-(OC₂H₄)ₗ-OR²²,

   wherein, in Formula (α), R²¹ and R²² each independently represent an alkyl group having 1 to 3 carbon atoms and may be the same or different from each other; and 1 denotes an integer of 2 to 4.

<9> The oil-based inkjet recording ink of the item <7>, wherein at least one of the organic solvent is one selected from the group consisting of a polyoxyethylene glycol monoalkyl ether represented by the following Formula (β); a polyoxypropylene glycol monoalkyl ether represented by the following Formula (γ); and a triethyl citrate,

   Formula (β): R³¹-(OC₂H₄)ₘ-OH,

   wherein, in Formula (β), R³¹ represents an alkyl group having 1 to 6 carbon atoms, and m denotes an integer of 3 to 6, and

   Formula (γ): R⁴¹-(OC₃H₆)ₙ-OH,

   wherein, in Formula (γ), R⁴¹ represents an alkyl group having 1 to 4 carbon atoms, and n denotes an integer of 2 to 3.
<10> The oil-based inkjet recording ink of the item <7>, wherein at least one of the organic solvent is one selected from the group consisting of a hydrocarbon based solvent and a lactone based solvent.

<11> The oil-based inkjet recording ink of any one of items <1> to <10>, wherein the resin is a (meth)acrylic resin.
<12> The oil-based inkjet recording ink of the item <11>, wherein the (meth)acrylic resin is a homopolymer of methyl methacrylate or a copolymer of methyl methacrylate and butyl methacrylate.
<13> The oil-based inkjet recording ink of any one of items <1> to <12>, wherein a weight average molecular weight of the resin is in a range of 5,000 to 100,000.

The oil-based inkjet recording ink according to the present invention will be described in detail below.

The oil-based inkjet recording ink according to the invention is constituted at least by the use of at least one selected from the azo pigments represented by Formula (1) shown below, at least one of a polymer dispersant, at least one of a resin, and at least one of an organic solvent. The oil-based inkjet recording ink according to the invention may further contain, if necessary, other components besides the above components.

In the invention, by the use of the azo-based yellow pigment having a special structure not containing heavy metals such as Ni and the like as the coloring components, excellent dispersibility and subsequent stability are obtained when they are dispersed as compared with conventional pigments containing heavy metals such as Ni and the like. By this constitution, when the azo-based yellow pigment is made into ink, not only high ink stability is obtained but also ejection can be performed stably at recording time and stable ejecting ability can be maintained in re-ejection after a halt of ejection. Further, recording on plain paper is made possible while restraining cockling (undulating deformation of the medium), and recording on resin media such as polyvinyl chloride and the like may also be possible.
In particular, the safety may also be improved by the constitution using the organic solvent having a flash temperature of 70°C or more and a boiling temperature of 150°C or more (preferably the vapor pressure at 20°C is 5 mmHg or lower).

The oil-based ink in the invention is ink using aliphatic hydrocarbon or a mixed solvent of aliphatic hydrocarbon and long chain alcohol as the main solvent, and has a water content of 1% by mass or less from the point of dispersion stability.

### - Azo Pigment -

The oil-based inkjet recording ink in the invention contains at least one of the azo pigment represented by Formula (1) shown below as the coloring agent. The azo pigment may have the structure represented by Formula (1), or may be a tautomer thereof, or may be a salt or a hydrate thereof.

The compound represented by Formula (1) is liable to form intermolecular interaction due to its specific structure, low in solubility in water or an organic solvent, and capable of being made to an azo pigment. The pigment is used by being finely dispersed in a solvent as solid particles such as molecular aggregate and the like differing from dyes that are used by being dissolved in water or an organic solvent in a molecular dispersion state.

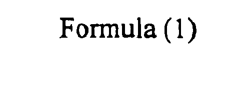

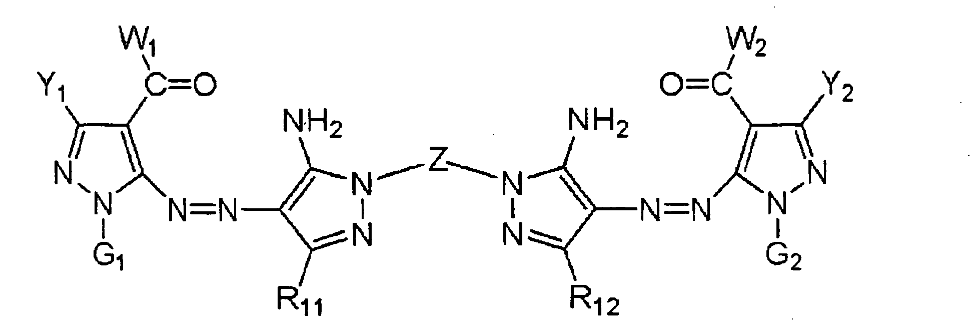

In Formula (1), Z represents a divalent group derived from a 5- to 8-membered heterocycle containing nitrogen atom(s); Y₁, Y₂, R₁₁, and R₁₂ each independently represent a hydrogen atom or a substituent; G₁ and G₂ each independently represent a hydrogen atom, an alkyl group, an aralkyl group, an alkenyl group, an alkynyl group, an aryl group or a heterocyclic group; and W₁ and W₂ each independently represent an alkoxy group, an amino group, a substituted amino group, an alkyl group or an aryl group.

In Formula (1), Z represents a divalent group derived from a 5- to 8-membered nitrogen-containing heterocyclic rings. Showing the examples of preferred nitrogen-containing heterocyclic rings without restricting the substitution position, a pyrrole ring, a pyrazole ring, a triazole ring, an imidazole ring, a thiazole ring, an isothiazole ring, an oxazole ring, an isooxazole ring, a thiadiazole ring, a thiophene ring, a furan ring, a pyridine ring, a pyrimidine ring, a triazine ring, and a pyridazine ring are exemplified. More preferred rings are 6-membered nitrogen-containing heterocyclic rings, and, e.g., a pyridine ring, a pyrimidine ring, and an S-triazine ring are exemplified. Z especially preferably represents a divalent group derived from a pyrimidine ring.
When Z represents a 6-membered nitrogen-containing heterocyclic ring, the intermolecular and intramolecular interactions of the dyestuff molecules are liable to be further improved from the points of hydrogen bonding property and molecular flatness, and so preferred.
The divalent groups derived from a 5- to 8-membered nitrogen-containing heterocyclic rings represented by Z may further be ring-condensed.

When each of Y₁ and Y₂ represents a substituent, the examples of the substituents include a halogen atom, an alkyl group (a straight chain, branched, or cyclic, substituted or unsubstituted alkyl group is exemplified, and a cycloalkyl group, a bicycloalkyl group, a tricycloalkyl structure having a polycyclic structure are also included, and the following shown alkyl groups in the substituents (e.g., alkyl groups such as an alkoxy group, an alkylcarbonyl group, and an alkylsulfonyl group) are also included in the alkyl groups having such a concept), an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkyl- or arylsulfonylamino group, a mercapto group, an alkylthio group, an arylthio group, a heterocyclic thio group, a sulfamoyl group, an alkyl- or arylsulfinyl group, an alkyl- or arylsulfonyl group, an acyl group, an aryloxycarbonyl group, an alkoxycarbonyl group, a carbamoyl group, an aryl- or heterocyclic azo group, an imido group, a phosphino group, a phosphinyl group, a phosphinyloxy group, a phosphinylamino group, and a silyl group. As the specific examples of these groups, the same groups as exemplified below as the examples of the substituents represented by R₁₁ and R₁₂ are exemplified.
Each of Y₁ and Y₂ especially preferably represents a hydrogen atom, an alkyl group (e.g., a methyl group), an aryl group (e.g., a phenyl group), a heterocyclic group (e.g., a 2-pyridyl group), or an alkylthio group (e.g., a methylthio group), more preferably a hydrogen atom, a methyl group, a phenyl group, or a methylthio group, and most preferably a hydrogen atom. Incidentally, Y₁ and Y₂ may be the same with or different from each other.

In Formula (1), each of R₁₁ and R₁₂ represents a hydrogen atom or a substituent. When each of R₁₁ and R₁₂ represents a substituent, the examples of the substituents include a straight chain or branched chain alkyl group having 1 to 12 carbon atoms (e.g., a methyl group, an ethyl group, an n-propyl group, an i-propyl group, an n-butyl group, an i-butyl group, a sec-butyl group, a t-butyl group, a 2-ethylhexyl group, a 2-methylsulfonylethyl group, a 3-phenoxypropyl group, and a trifluoromethyl group), a straight chain or branched chain aralkyl group having 7 to 18 carbon atoms (e.g., a benzyl group), a straight chain or branched chain alkenyl group having 2 to 12 carbon atoms (e.g., a vinyl group), a straight chain or branched chain alkynyl group having 2 to 12 carbon atoms (e.g., an ethynyl group), a straight chain or branched chain cycloalkyl group having 3 to 12 carbon atoms (e.g., a cyclopentyl group), a straight chain or branched chain cycloalkenyl group having 3 to 12 carbon atoms (e.g., a cyclopentenyl group), a halogen atom (e.g., a chlorine atom, a bromine atom), an aryl group (e.g., a phenyl group, a 4-t-butylphenyl group, and a 2,4-di-t-amylphenyl group), a heterocyclic group (e.g., an imidazolyl group, a pyrazolyl group, a triazolyl group, a 2-furyl group, a 2-thienyl group, a 2-pyrimidinyl group, and a 2-benzothiazolyl group), a cyano group, a hydroxy group, a nitro group, a carboxy group, an amino group, an alkoxy group (e.g., a methoxy group, an ethoxy group, a 2-methoxyethoxy group, and a 2-methylsulfonylethoxy group), an aryloxy group (e.g., a phenoxy group, a 2-methylphenoxy group, a 4-t-butylphenoxy group, a 3-nitrophenoxy group, a 3-t-butyloxycarbonylphenoxy group, and a 3-methoxycarbonylphenyloxy group), an acylamino group (e.g., an acetamido group, a benzamido group, a 4-(3-t-butyl-4-hydroxyphenoxy)butanamido group), an alkylamino group (e.g., a methylamino group, a butylamino group, a diethylamino group, and a methylbutylamino group), an arylamino group (e.g., a phenylamino group, and a 2-chloroanilino group), a ureido group (e.g., a phenylureido group, a methylureido group, and an N,N-dibutylureido group), a sulfamoylamino group (e.g., an N,N-dipropylsulfamoylamino group), an alkylthio group (e.g., a methylthio group, an octylthio group, and a 2-phenoxyethylthio group), an arylthio group (e.g., a phenylthio group, a 2-butoxy-5-t-octylphenylthio group, and a 2-carboxyphenylthio group), an alkoxycarbonylamino group (e.g., a methoxycarbonylamino group), an alkylsulfonylamino group and an arylsulfonylamino group (e.g., a methylsulfonylamino group, a phenylsulfonylamino group, and a p-toluenesulfonylamino group), a carbamoyl group (e.g., an N-ethylcarbamoyl group, and an N,N-dibutylcarbamoyl group), a sulfamoyl group (e.g., an N-ethylsulfamoyl group, an N,N-dipropylsulfamoyl group, and an N-phenylsulfamoyl group), a sulfonyl group (e.g., a methylsulfonyl group, an octylsulfonyl group, a phenylsulfonyl group, and a p-toluenesulfonyl group), an alkoxycarbonyl group (e.g., a methoxycarbonyl group, and a butyloxycarbonyl group), a heterocyclic oxy group (e.g., a 1-phenyltetrazol-5-oxy group, and a 2-tetrahydropyranyloxy group), an azo group (e.g., a phenylazo group, a 4-methoxyphenylazo group, a 4-pivaloylaminophenylazo group, and a 2-hydroxy-4-propanoylphenylazo group), an acyloxy group (e.g., an acetoxy group), a carbamoyloxy group (e.g., an N-methylcarbamoyloxy group, and an N-phenylcarbamoyloxy group), a silyloxy group (e.g., a trimethylsilyloxy group, and a dibutylmethylsilyloxy group), an aryloxycarbonylamino group (e.g., a phenoxycarbonylamino group), an imido group (e.g., an N-succinimido group, and an N-phthalimido group), a heterocyclic thio group (e.g., a 2-benzothiazolylthio group, a 2,4-diphenoxy-1,3,5-triazol-6-thio group, and a 2-pyridylthio group), a sulfinyl group (e.g., a 3-phenoxypropylsulfinyl group), a phosphonyl group (e.g., a phenoxyphosphonyl group, an octyloxyphosphonyl group, and a phenylphosphonyl group), an aryloxycarbonyl group (e.g., a phenoxycarbonyl group), an acyl group (e.g., an acetyl group, a 3-phenylpropanoyl group, and a benzoyl group), and an ionic hydrophilic group (e.g., a carboxyl group, a sulfo group, a phosphono group, and a quaternary ammonium group).

In Formula (1), each of R₁₁ and R₁₂ preferably represents a substituted or unsubstituted acylamino group having 1 to 8 carbon atoms, a substituted or unsubstituted alkyl group having 1 to 12 carbon atoms, a substituted or unsubstituted aryl group having 4 to 12 carbon atoms, or a substituted or unsubstituted heterocyclic group having 4 to 12 carbon atoms, more preferably a straight chain or branched alkyl group having 1 to 8 carbon atoms, even more preferably a methyl group or a t-butyl group, and most preferably a t-butyl group. Incidentally, R₁₁ and R₁₂ may be the same with or different from each other.

Each of G₁ and G₂ represents a hydrogen atom, an alkyl group, a cycloalkyl group, an aralkyl group, an alkenyl group, an alkynyl group, an aryl group, or a heterocyclic group, preferably a hydrogen atom, a methyl group, an ethyl group, an n-propyl group, an isopropyl group, a t-butyl group, a cyclopropyl group, a benzyl group, a 2-phenethyl group, a vinyl group, an allyl group, an ethynyl group, a propargyl group, a phenyl group, a p-tolyl group, a naphthyl group, a pyridyl group, a pyrimidinyl group, or a pyrazinyl group, more preferably a hydrogen atom, a methyl group, a phenyl group, a pyridyl group, a pyrimidinyl group, or a pyrazinyl group, and especially preferably a methyl group, a 2-pyridyl group, a 2,6-pyrimidinyl group, or a 2,5-pyrazinyl group.
When each of G₁ and G₂ represents an alkyl group, the alkyl group is preferably an alkyl group having 5 or less carbon atoms, more preferably an alkyl group having 3 or less carbon atoms, and most preferably a methyl group. Incidentally, G₁ and G₂ may be the same with or different from each other.

In Formula (1), each of W₁ and W₂ represents an alkoxy group, an amino group, a substituted amino group, an alkyl group, or an aryl group.

As the alkoxy group represented by W₁ and W₂, a substituted or unsubstituted alkoxy group having 1 to 30 carbon atoms, e.g., a methoxy group, an ethoxy group, an isopropoxy group, a t-butoxy group, an n-octyloxy group, and a 2-methoxyethoxy group are preferably exemplified.

As the substituted amin group represented by W₁ and W₂, an alkylamino group, an arylamino group, and a heterocyclic amino group are exemplified, and preferably an amino group, a substituted or unsubstituted alkylamino group having 1 to 30 carbon atoms, a substituted or unsubstituted anilino group having 6 to 30 carbon atoms, e.g., a methylamino group, a dimethylamino group, an anilino group, an N-methylanilino group, and a diphenylamino group are exemplified.

As the alkyl group represented by W₁ or W₂, a straight chain, branched, or cyclic, substituted or unsubstituted alkyl group is listed. Examples thereof include a cycloalkyl group, a bicycloalkyl group, and a tricyclo structure and the like having many ring structures. Alkyl groups in the substituents to be described hereinafter (for example, alkyl groups of an alkoxy group, an alkylcarbonyl group and an alkylsulfonyl group) represent the alkyl group of the above-described concept.
Examples of the alkyl group preferably include an alkyl group having 1 to 30 carbon atoms, and particularly preferably an alkyl group having 1 to 8 carbon atoms. Specifically, examples of the alkyl group include a methyl group, an ethyl group, an n-propyl group, an i-propyl group, a t-butyl group, an n-octyl group, an eicosyl group, a 2-chloroethyl group, a 2-cyanoethyl group, a 2-ethylhexyl group and the like. Preferable examples of the cycloalkyl group include a substituted or unsubstituted cycloalkyl group having 3 to 30 carbon atoms such as a cyclohexyl group, a cyclopentyl group, and a 4-n-dodecylcyclohexyl group. Preferable examples of the bicycloalkyl group include a substituted or unsubstituted bicycloalkyl group having 5 to 30 carbon atoms, namely, a monovalent group in which a hydrogen atom is removed from bicycloalkane having 5 to 30 carbon atoms, for example, a bicyclo [1.2.2] heptan-2-yl group and a bicyclo [2.2.2] octan-3-yl group.

Preferable examples of the aryl group represented by W₁ or W₂ include a substituted or unsubstituted aryl group having 6 to 30 carbon atoms such as a phenyl group, a p-tolyl group, a naphthyl group, an m-chlorophenyl group, and an o-hexadecanoylaminophenyl group.

W₁ or W₂ is preferably an alkoxy group, an amino group, a substituted amin group or an alkyl group, more preferably an alkoxy group, a substituted amin group or an amino group, even more preferably an alkoxy group having 5 or less carbon atoms, an amino group (an -NH₂ group), or an alkylamino group having 5 or less carbon atoms, and particularly preferably an alkoxy group having 3 or less carbon atoms, or an alkylamino group having 3 or less carbon atoms. Among them a methoxy group is particularly preferable as W₁ or W₂. When W₁ and W₂ are an alkoxy group having 5 or less carbon atoms, an amino group, or an alkylamino group having 5 or less carbon atoms, a pigment molecule easily forms a stronger interaction in the molecule and/or between the molecules, and thereby, subject to form a more stable pigment in molecular arrangement which is preferable from the viewpoints of a good hue and high fastness (for example, fastness against light, gas, heat, water, or chemicals).

Examples of a substituent when Z, Y₁, Y₂, R₁₁, R₁₂, G₁, G₂, W₁, or W₂ further have a substituent in the invention include the following substituents.

Examples of the substituent include a halogen atom, an alkyl group, an aralkyl group, an alkenyl group, an alkynyl group, an aryl group, a heterocyclic group, a cyano group, a hydroxy group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an arylazo group, a heterocyclic azo group, an imido group, a phosphino group, a phosphinyl group, a phosphinyloxy group, a phosphinylamino group, and a silyl group.

In the azo pigment in the invention, a tautomer of the azo pigment represented by Formula (1) is included in the scope thereof. Formula (1) is shown as a canonical structure among several tautomers with chemically acceptable structures. Tautomers other than the above-described structure may be used. The azo pigment may be used as a mixture containing plural tautomers.

For example, an azo-hydrazone tautomer represented by Formula (1') described below may be thought for the azo pigment represented by Formula (1).

The compound represented by Formula (1') which is a tautomer of the azo pigment represented by Formula (1) is included in the scope of the invention.

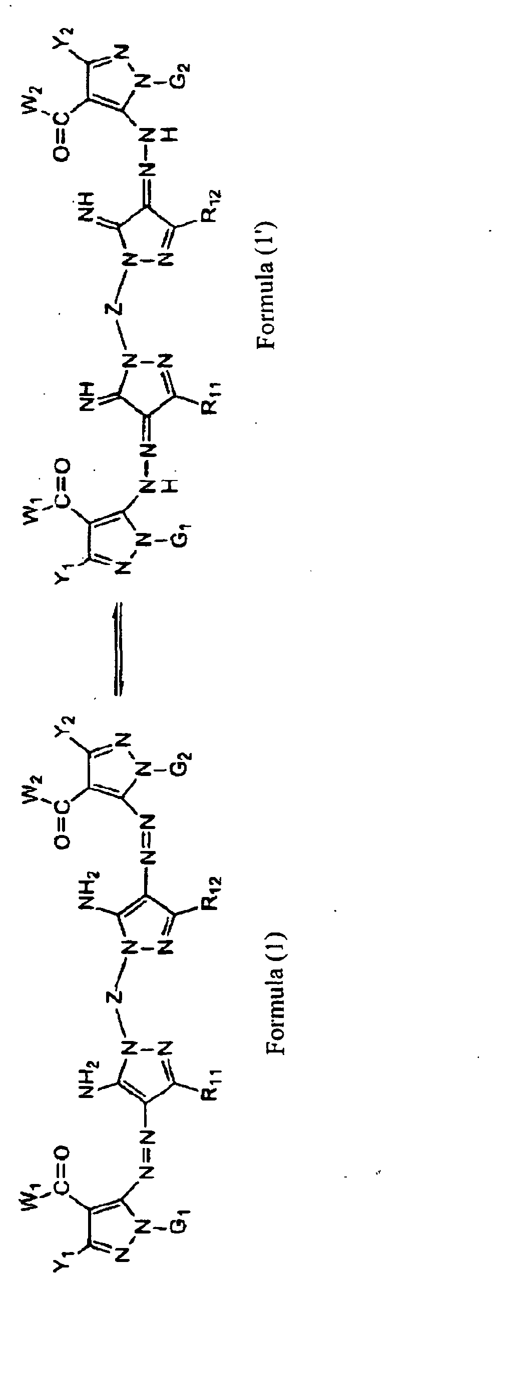

R₁₁ R₁₂, W₁, W₂, Y₁, Y₂, G₁, G₂, and Z in Formula (1') have the same definitions as R₁₁, R₁₂, W₁, W₂, Y₁, Y₂, G₁, G₂, and Z in Formula (1), respectively.

In this regard, with reference to the combination of preferable substituents of the compound represented by Formula (1), the compound in which at least one of various substituents are the above-described preferred groups is more preferred, the compound in which more various substituents are the above-described preferred groups is more preferred, and the compound in which all substituents are the above-described preferred groups is particularly preferred.

Examples of a particularly preferable combination of the azo pigment represented by Formula (1) of the invention include at least one of the following combinations (a) to (e):

(a) Preferably, W₁ and W₂ are each independently an alkoxy group (for example, a methoxy group, an ethoxy group, an i-propoxy group, or a t-butoxy group), an amino group (for example, an -NH₂ group, a methylamino group, a dimethylamino group, or an anilino group), an alkyl group (for example, a methyl group, an ethyl group, an n-propyl group, an i-propyl group, a t-butyl group, or a cyclopropyl group) or an aryl group (for example, a phenyl group, a p-tolyl group, or a naphthyl group). Among them, an alkoxy group, an amino group, and an alkyl group are preferable. Further, an alkoxy group and an amino group are preferable. An alkoxy group whose total number of carbon atoms is 5 or less, an amino group (an -NH₂ group), and an alkylamino group whose total number of carbon atoms is 5 or less are further preferable. An alkoxy group whose total number of carbon atoms is 3 or less, an amino group (an -NH₂ group), an alkylamino group whose total number of carbon atoms is 3 or less are particularly preferable. A methoxy group (an -OCH₃ group) is particularly preferable as W₁ or W₂.

(b) Preferably, R₁₁ and R₁₂ are each independently a hydrogen atom or a substituent (for example, a substituted or unsubstituted acylamino group having 1 to 8 carbon atoms in total, a substituted or unsubstituted alkyl group having 1 to 12 carbon atoms in total, a substituted or unsubstituted aryl group having 6 to 18 carbon atoms in total, or a substituted or unsubstituted heterocyclic group having 4 to 12 carbon atoms in total). A straight chain or branched alkyl group having 1 to 8 carbon atoms in total, a substituted or unsubstituted aryl group having 6 to 10 carbon atoms in total, and a substituted or unsubstituted heterocyclic group having 4 to 8 carbon atoms in total are more preferable. Specifically, a methyl group, an i-propyl group, a t-butyl group, a phenyl group or a pyridyl group is preferable, and a tert-butyl group is particularly preferable as each of R₁₁ and R₁₂.

(c) Z represents a divalent group derived from a 5- to 8-membered nitrogen-containing heterocycle and it may be further condensed. Preferable examples of the nitrogen-containing heterocycle in Z include a 5- or 6-membered substituted or unsubstituted nitrogen-containing heterocycle such as a pyrrole ring, a pyrazole ring, a triazole ring, an imidazole ring, a thiazole ring, an isothiazole ring, an oxazole ring, an isoxazole ring, a thiadiazole ring, a thiophene ring, a furan ring, a pyridine ring, a pyrimidine ring, a triazine ring, and a pyridazine ring. Particularly, a 6-membered nitrogen-containing heterocycle having 3 to 10 carbon atoms is preferable. Further, preferable examples of the heterocycle include a pyridine ring, a pyrimidine ring, an s-triazine ring, a pyridazine ring, and a pyrazine ring. More preferable examples thereof include a pyridine ring, a pyrimidine ring, an s-triazine ring, a pyridazine ring, and a pyrazine ring. A pyrimidine ring and an s-triazine ring are further preferable. A pyrimidine ring is particularly preferable as the heterocycle from which a divalent group is derived for Z.

(d) G₁ and G₂ each independently represent a hydrogen atom, an alkyl group, a cycloalkyl group, an aralkyl group, an alkenyl group, an alkynyl group, an aryl group, or a heterocyclic group. Particularly, a hydrogen atom, a methyl group, an ethyl group, an n-propyl group, an i-propyl group, a t-butyl group, a cyclopropyl group, a benzyl group, a 2-phenethyl group, a vinyl group, an allyl group, an ethynyl group, a propargyl group, a phenyl group, a p-tolyl group, a naphthyl group, a pyridyl group, a pyrimidinyl group, and a pyrazinyl group are preferable. Further, a hydrogen atom, a methyl group, a phenyl group, a pyridyl group, a pyrimidinyl group, a pyrazinyl group are preferable. Among them, a methyl group, a 2-pyridyl group, a 2,6-pyrimidinyl group, and a 2,5-pyrazinyl group are particularly preferable.
As the alkyl group represented by G₁ or G₂, an alkyl group whose total number of carbon atoms is 5 or less is more preferable, an alkyl group whose total number of carbon atoms is 3 or less is further preferable, and a methyl group is particularly preferable.

(e) Y₁ and Y₂ each independently represent a hydrogen atom, an alkyl group (for example, a methyl group) an aryl group (for example, a phenyl group), a heterocyclic group (for example, a 2-pyridyl group), or an alkylthio group (for example, a methylthio group), and more preferably, a hydrogen atom, a methyl group, a phenyl group, or a methylthio group. Among them, a hydrogen atom is particularly preferable as Y₁ or Y₂.

Among the azo pigment represented by Formula (1), an azo pigment represented by the following Formula (2) is preferable in the invention.

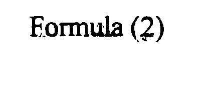

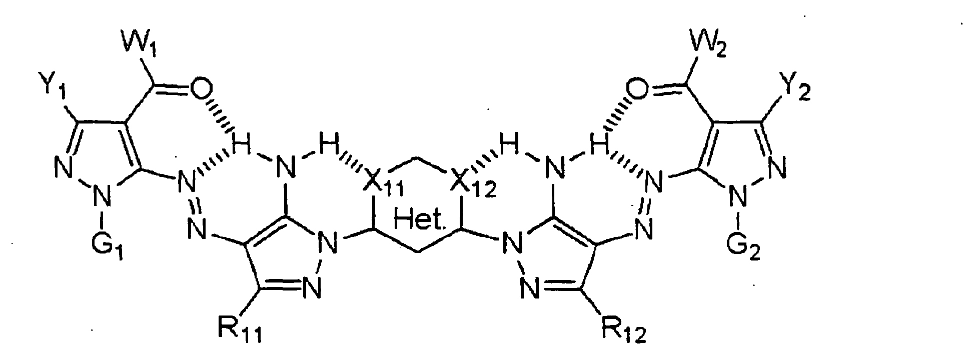

G₁, G₂, R₁₁, R₁₂, W₁, W₂, Y₁, and Y₂ in Formula (2) have the same definitions as G₁, G₂, R₁₁, R₁₂, W₁, W₂, Y₁, and Y₂ in Formula (1), respectively.

X₁₁ and X₁₂ each independently represent a heteroatom in a divalent group (Het.) derived from a nitrogen-containing heterocycle represented by Z in Formula (1).

In the invention, a large number of tautomers may be thought for the azo pigments represented by Formulae (1).

Further, in the invention, it is preferable that the azo pigment represented by Formula (1) has a substituent which forms an intramolecular hydrogen bond or an intramolecular cross hydrogen bond. It is preferable that the azo pigment represented by Formula (1) in the invention has at least one of the substituent which forms an intramolecular cross hydrogen bond. It is more preferable that the azo pigment has at least three of the substituent which forms an intramolecular hydrogen bond. It is particularly preferable that the azo pigment has at least three of the substituent which forms an intramolecular hydrogen bond and at least two of the hydrogen bonds form an intramolecular cross hydrogen bond.

Among the azo pigments represented by Formula (1), particularly preferable examples of the azo pigment include the azo pigments represented by Formulae (2).

As shown in Formula (2), the reason why these structures are preferable is that a nitrogen atom which forms a heterocyclic group, a hydrogen atom, and a heteroatom (a nitrogen atom of an azo group or its tautomer, i.e., hydrazone group, an oxygen atom of a carbonyl group or a nitrogen atom of an amino group) contained in an azo pigment structure easily form at least one intramolecular cross hydrogen bond (intramolecular hydrogen bond).

Further, as shown in Formula (2), the reason why these structures are preferable is that a nitrogen atom which forms a heterocyclic group, a hydrogen atom of an amino group, and a heteroatom (for example, a nitrogen atom of an azo group or its tautomer, i.e., hydrazone group, an oxygen atom of a carbonyl group or a nitrogen atom of an amino group) contained in an azo pigment structure easily form at least four intramolecular hydrogen bonds and easily form at least two intramolecular cross hydrogen bonds.

As a result, the planarity of the molecules is improved and intramolecular and intermolecular interactions are improved. For example, the crystallinity of the azo pigment represented by Formula (12) becomes high (a higher order structure is easily formed). Further, required performances as the pigment, for example, lightfastness, thermal stability, wet heat stability, waterproof properties, gas resistance or solvent resistance are significantly improved. Thus, it is the most preferable example.

In the azo pigment in the invention, an isotope (for example, ²H, ³H, ¹³C, or ¹⁵N) may be contained in the compounds represented by Formula (1).

Hereinafter, Pig.-1 to Pig.-48 will be exemplified as specific examples of the azo pigments represented by Formulae (1). However, the azo pigment to be used in the invention is not limited thereto. In addition, the structure of the following specific example is shown as a canonical structure among several tautomers with chemically acceptable structures. Needless to say, the structure may be the structure of tautomers other than the above-described structure.

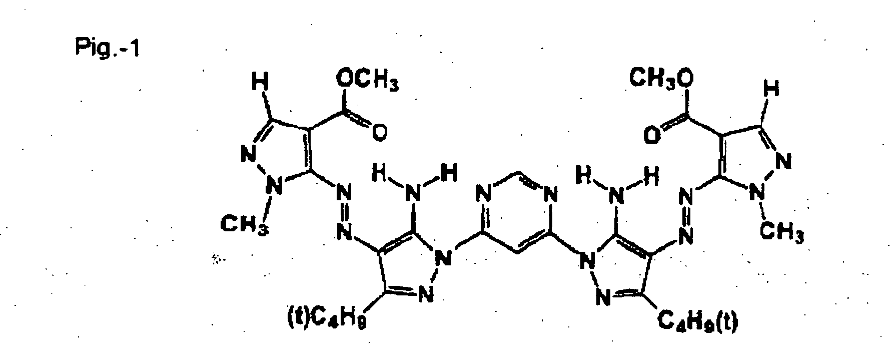

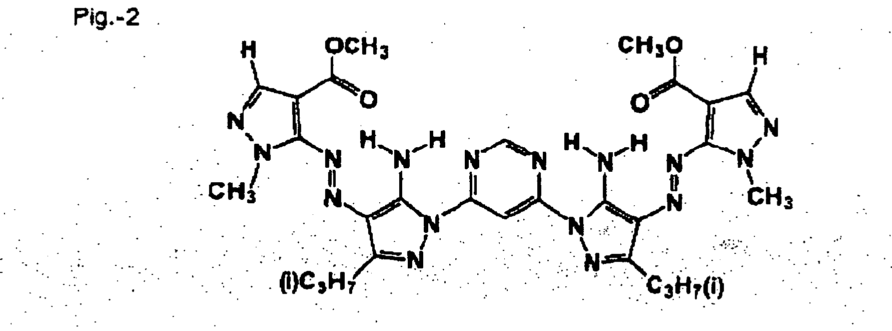

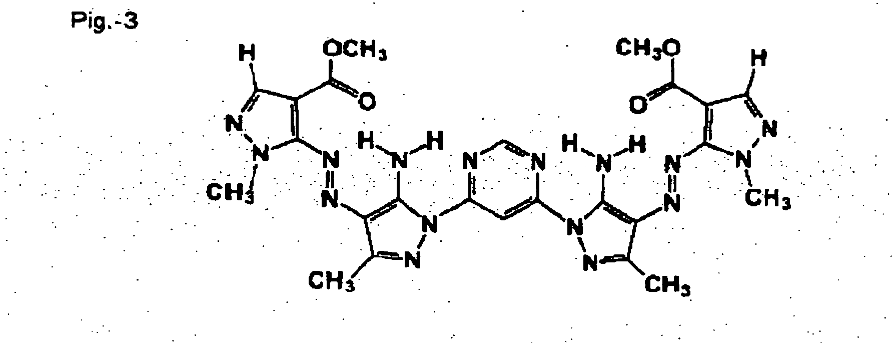

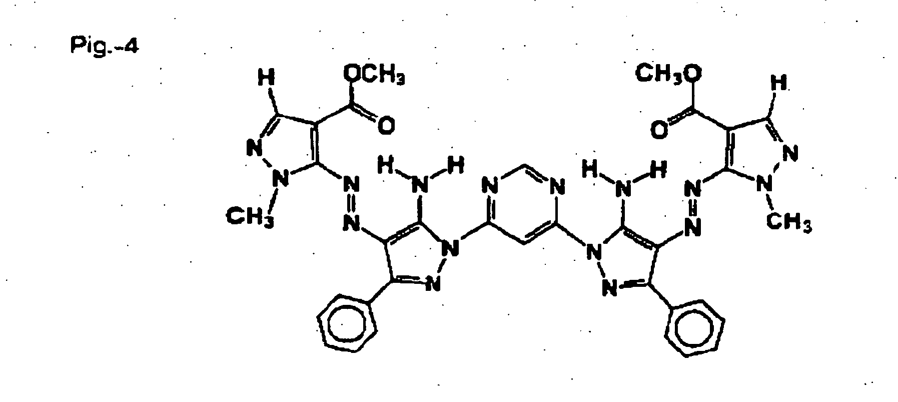

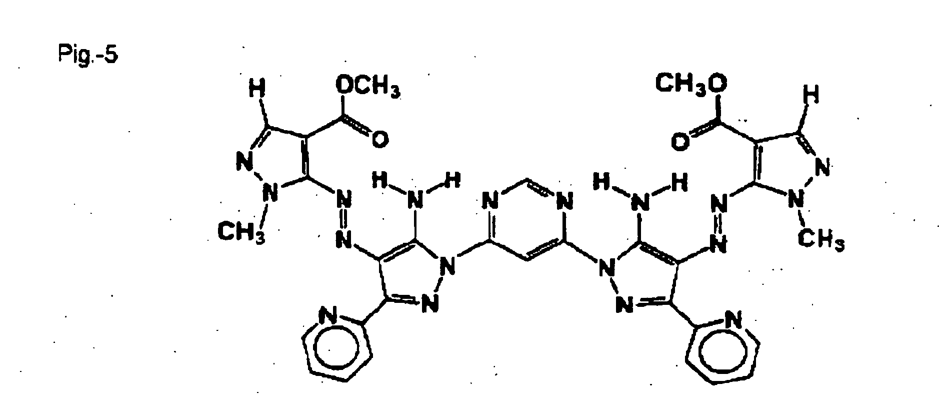

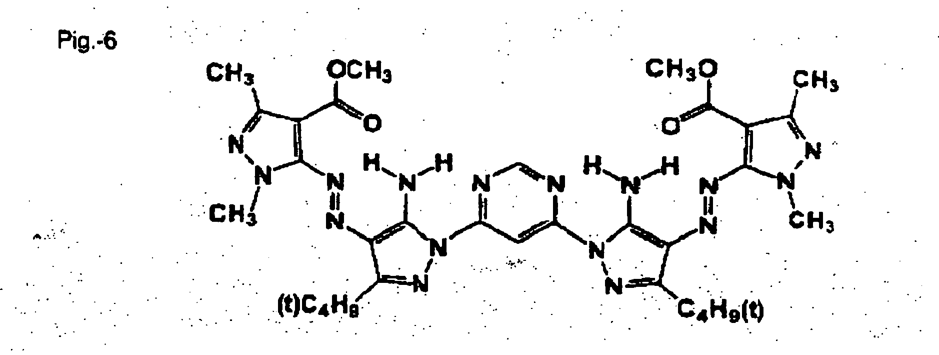

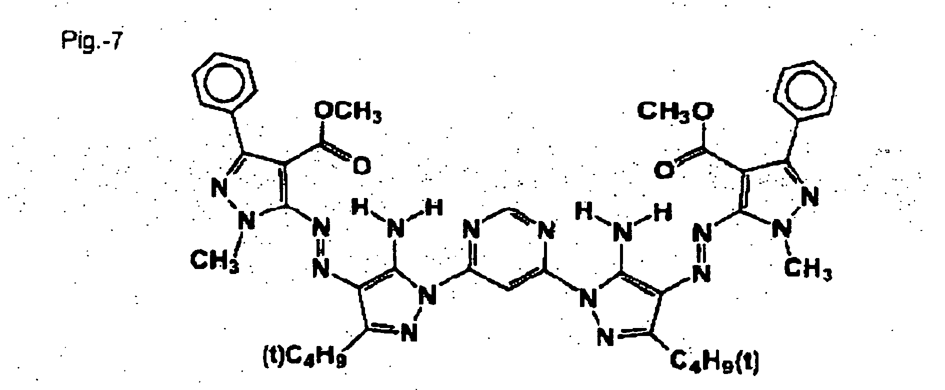

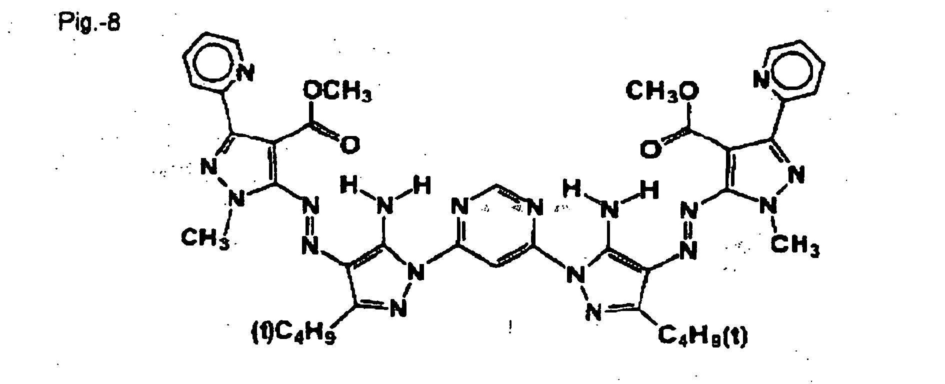

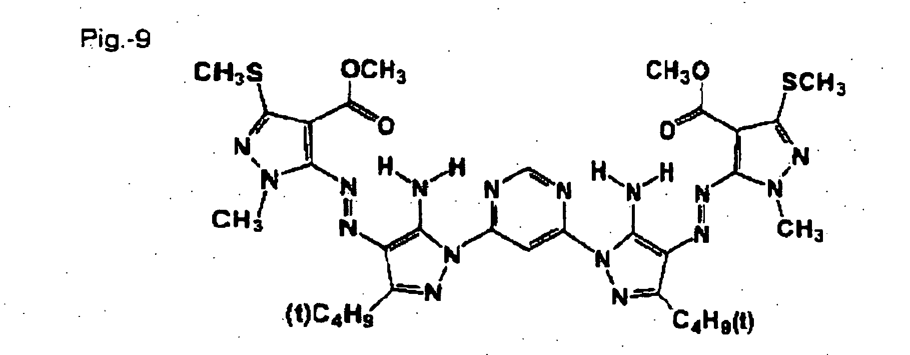

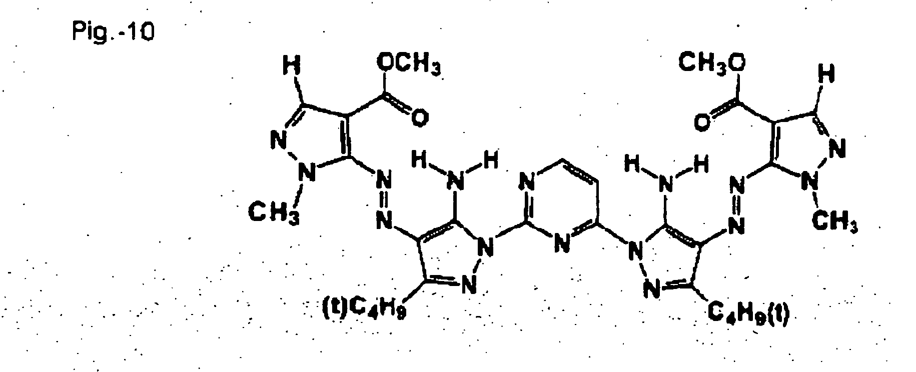

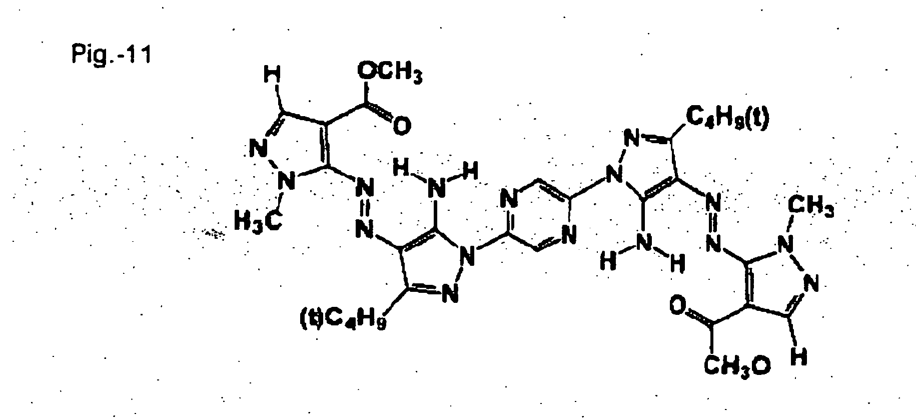

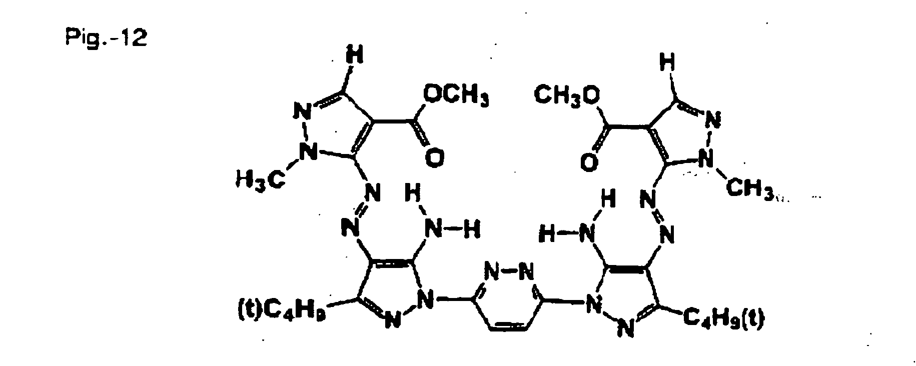

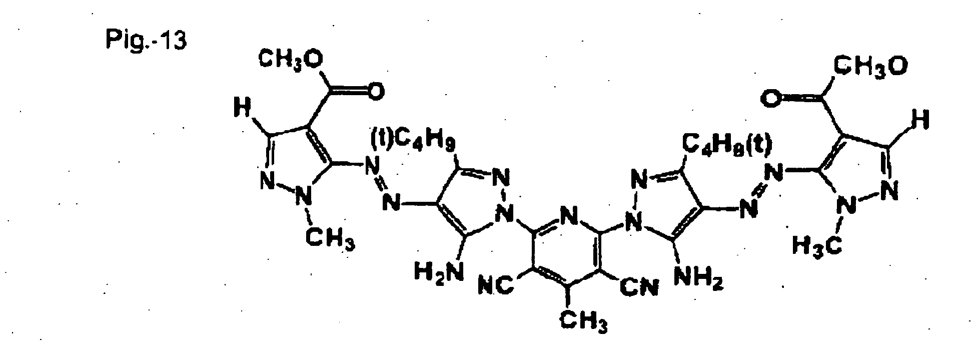

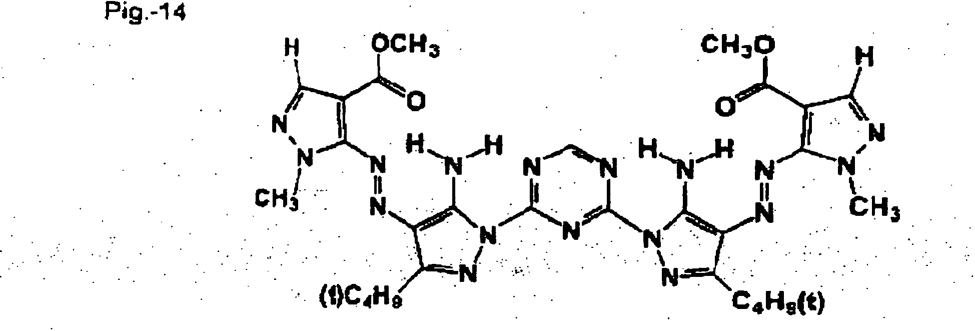

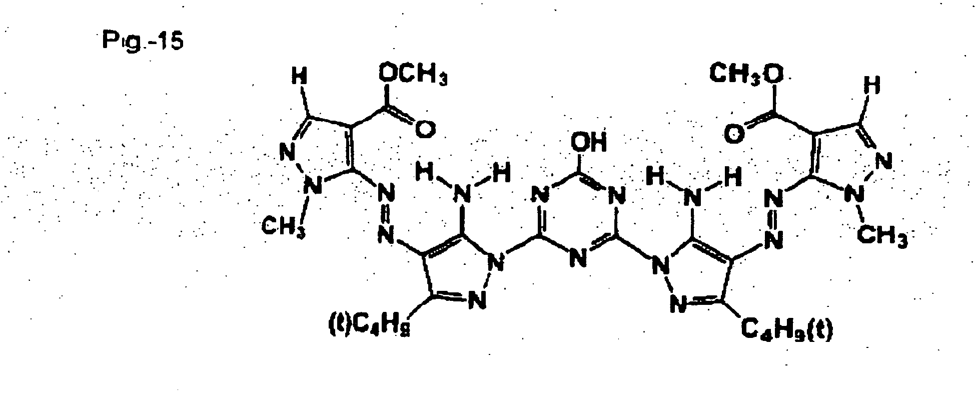

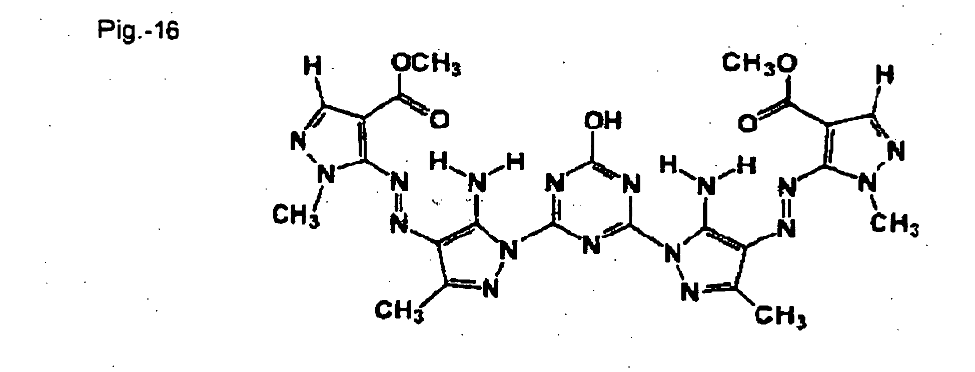

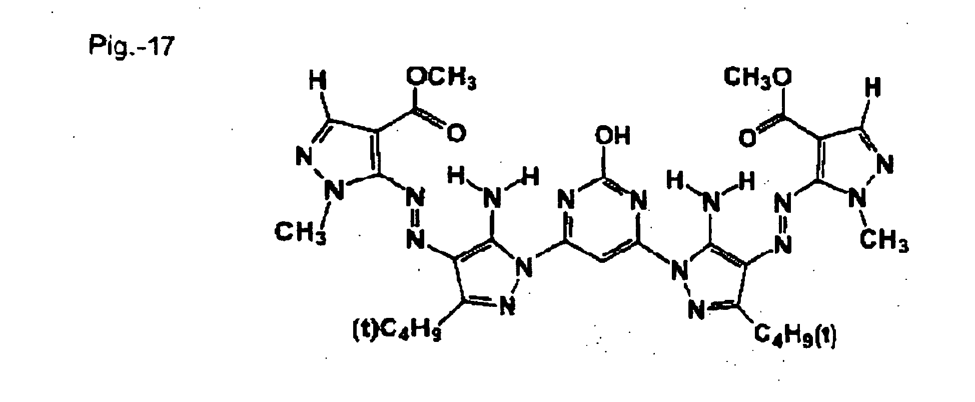

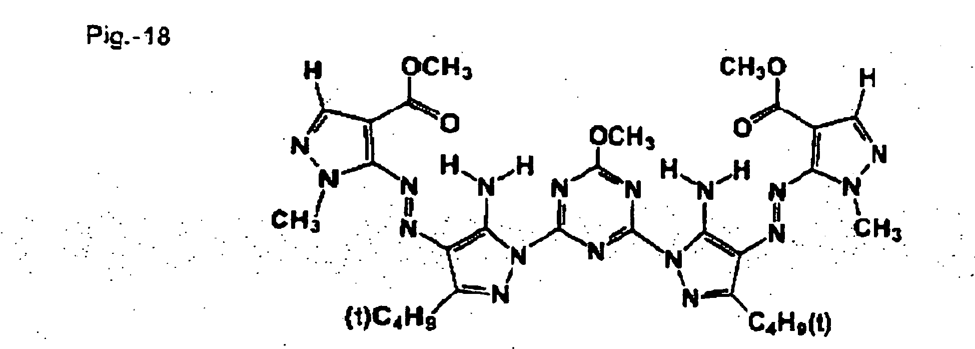

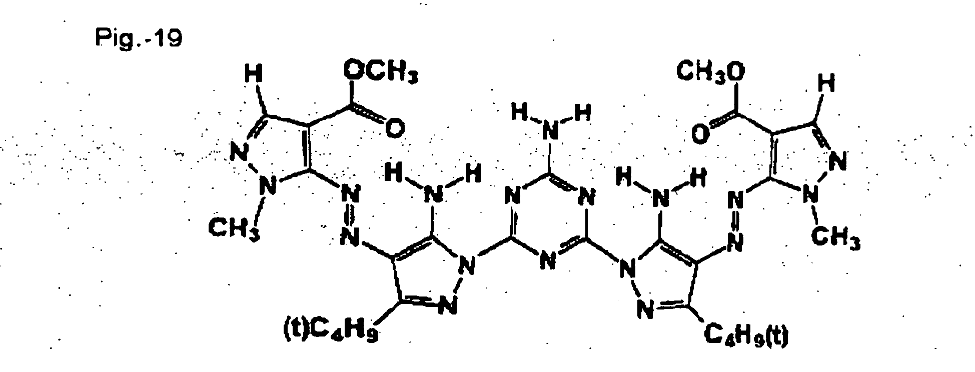

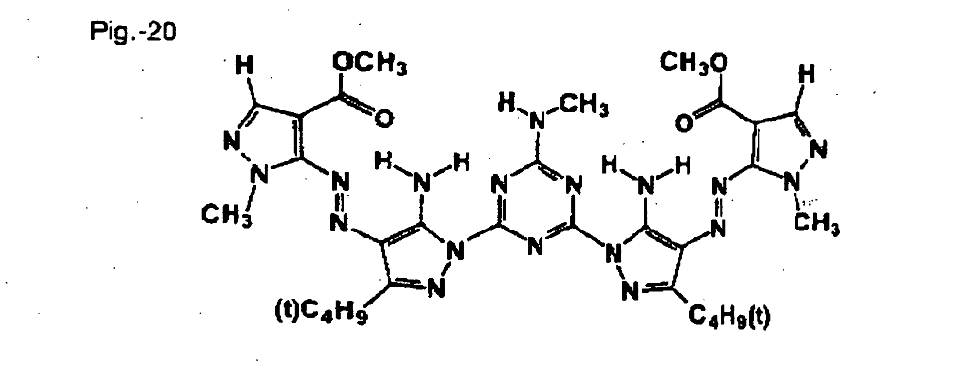

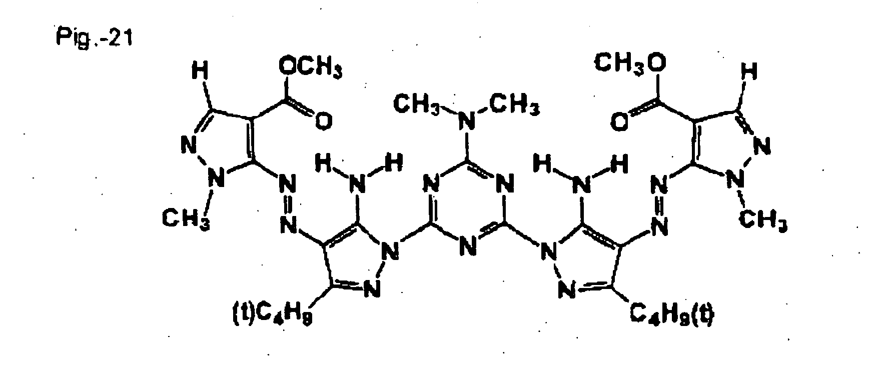

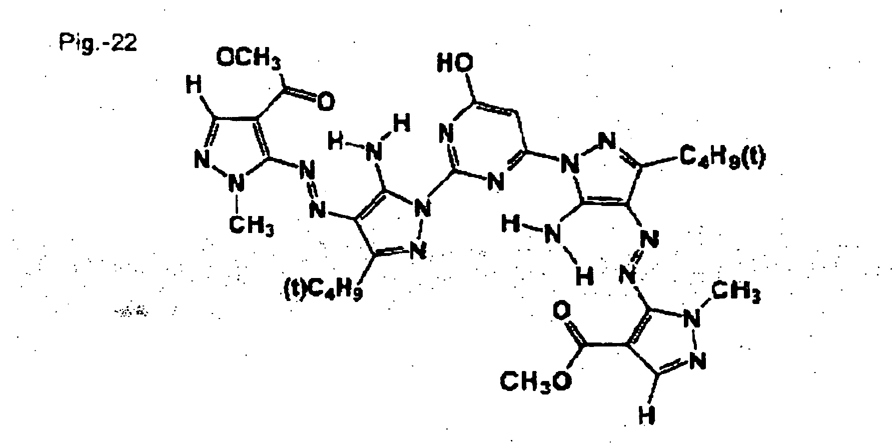

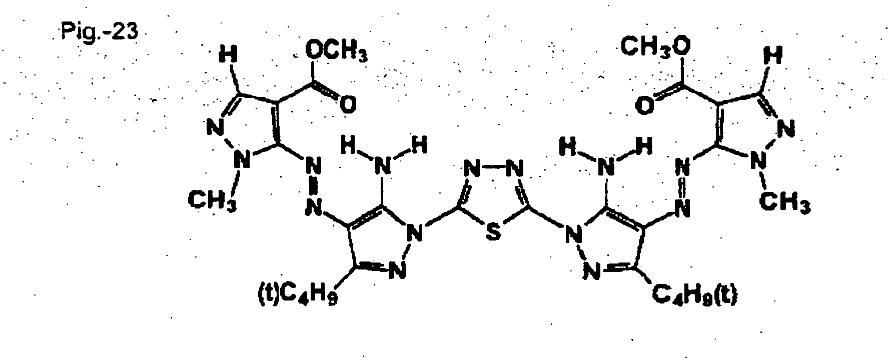

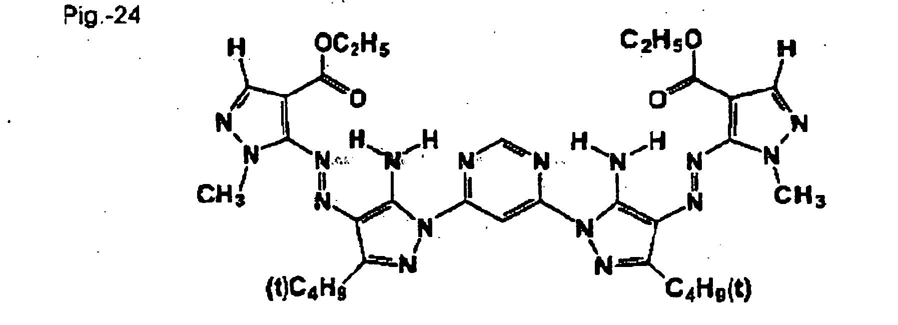

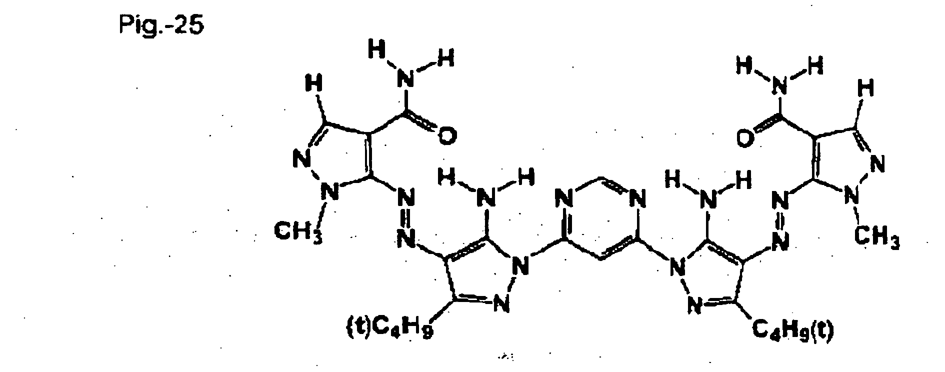

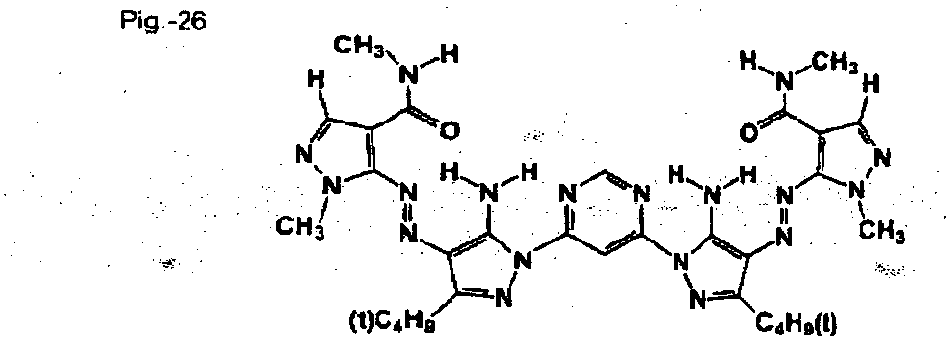

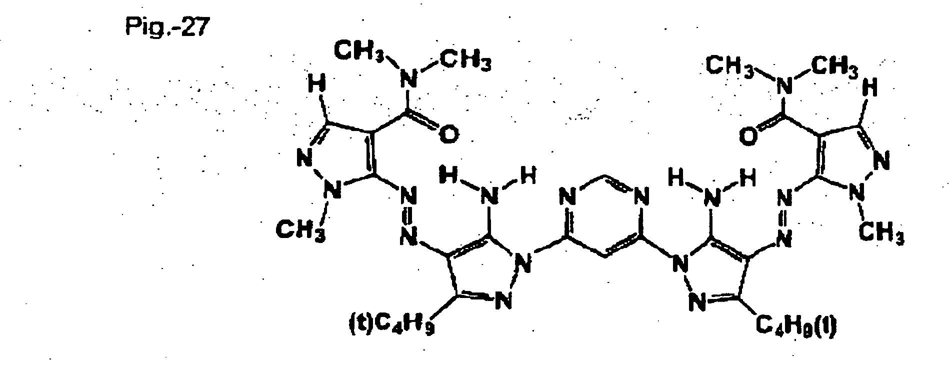

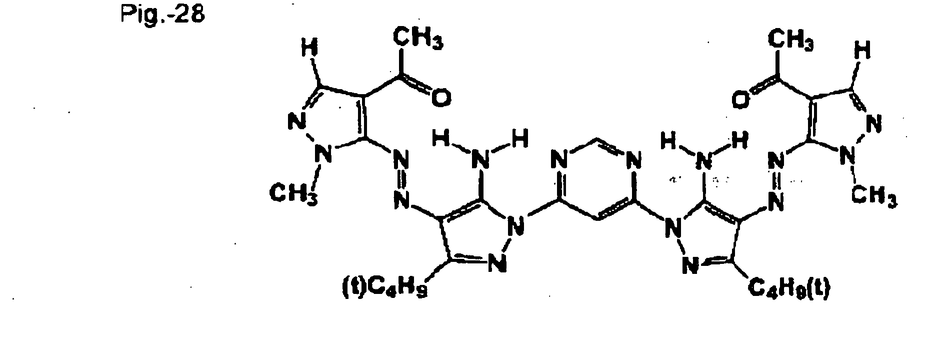

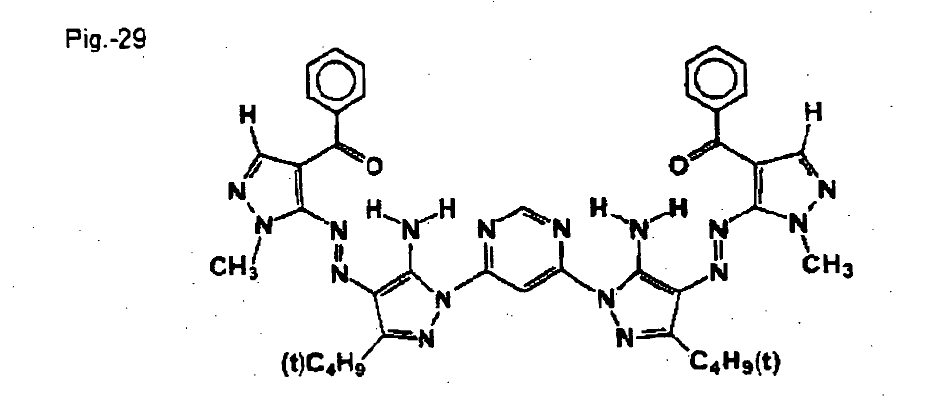

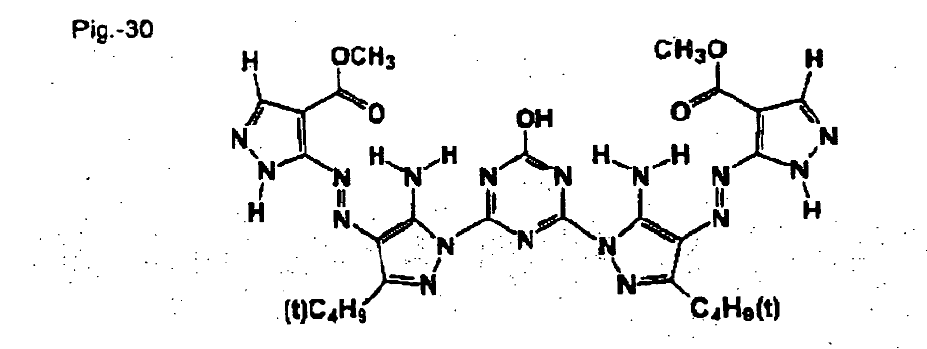

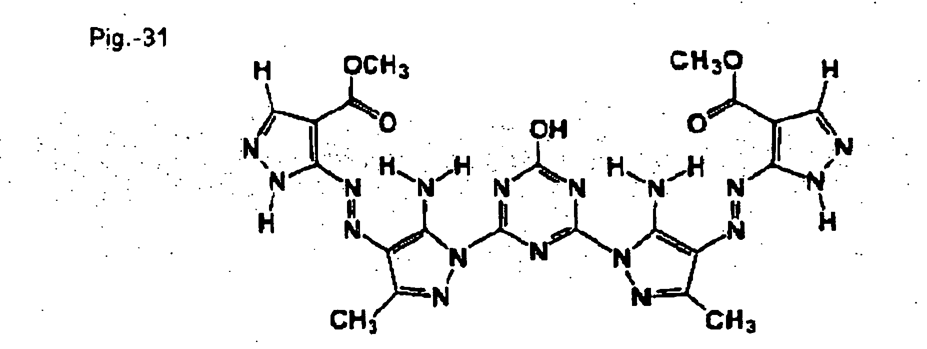

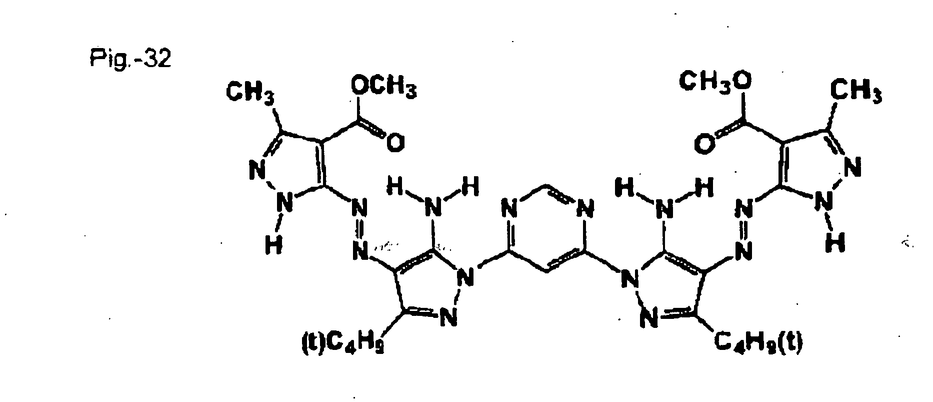

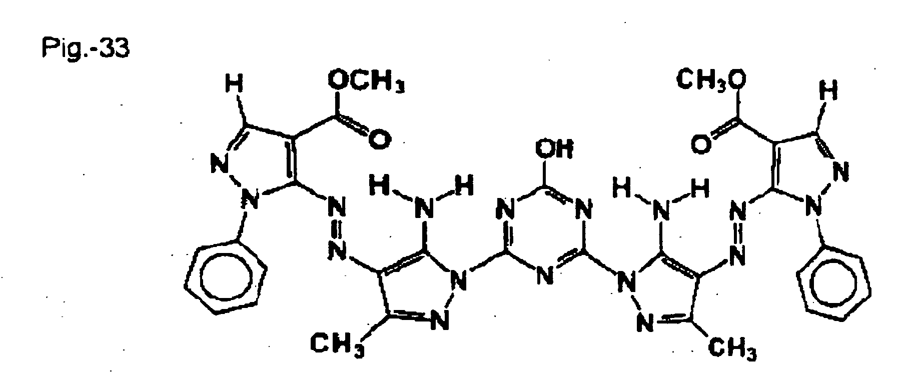

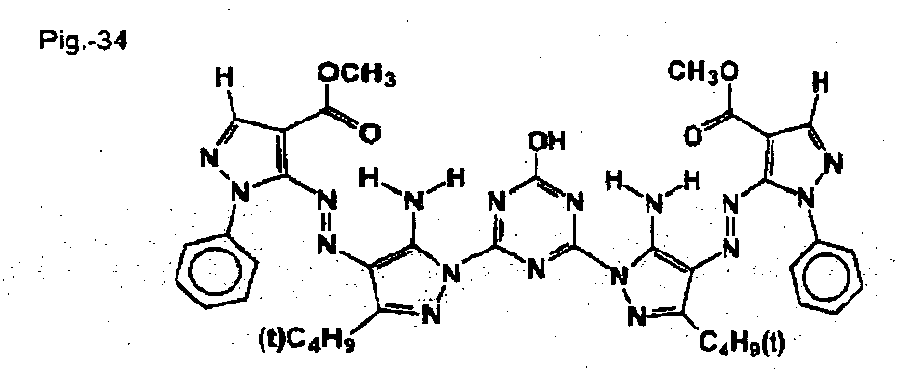

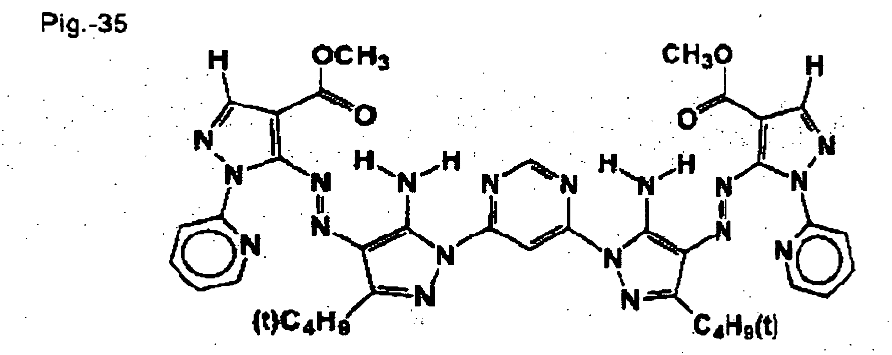

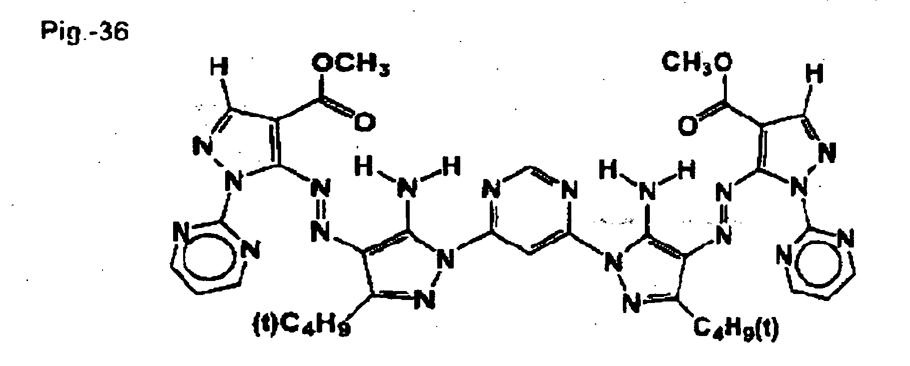

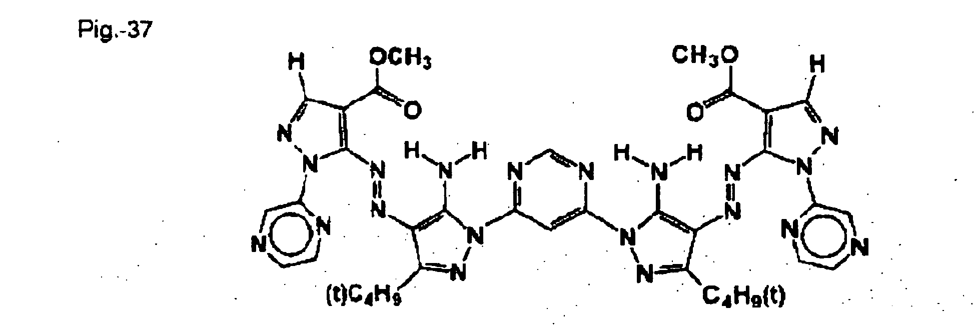

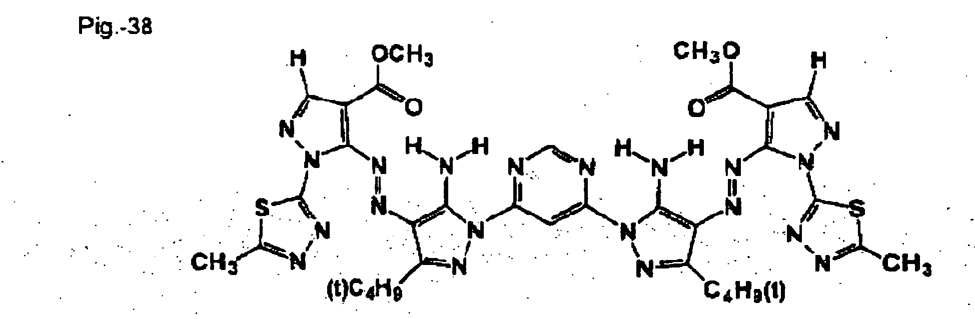

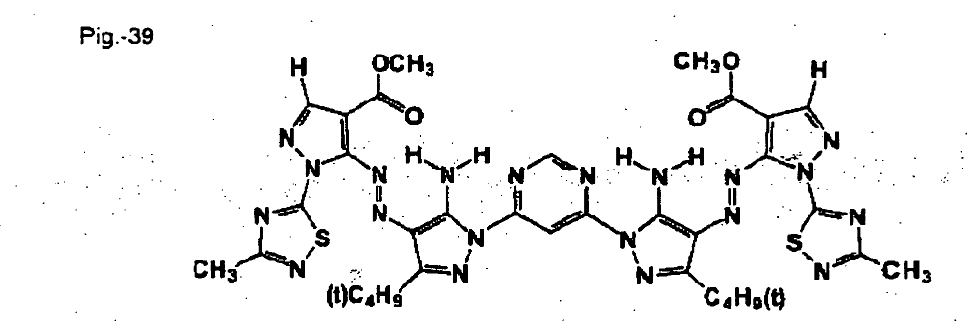

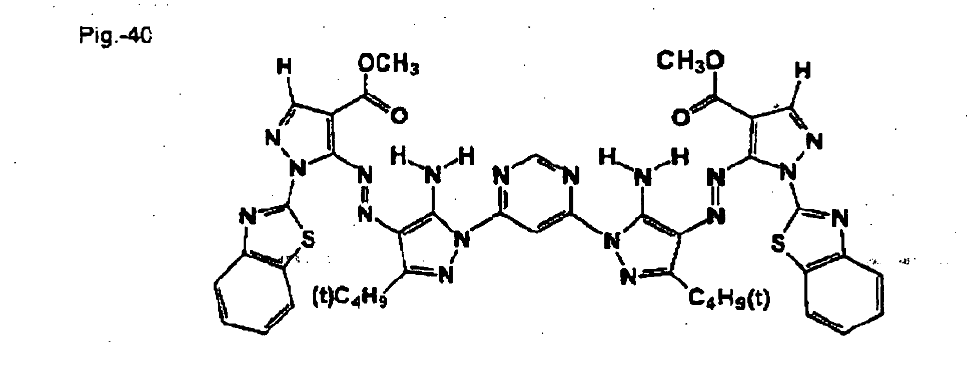

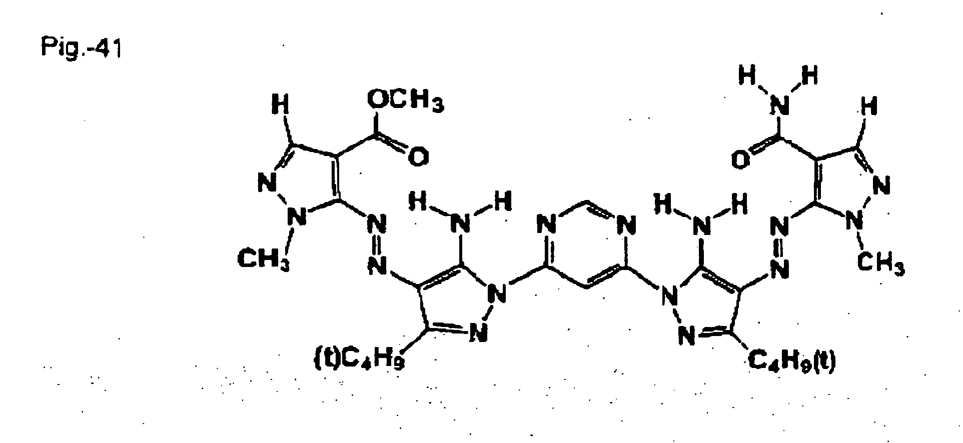

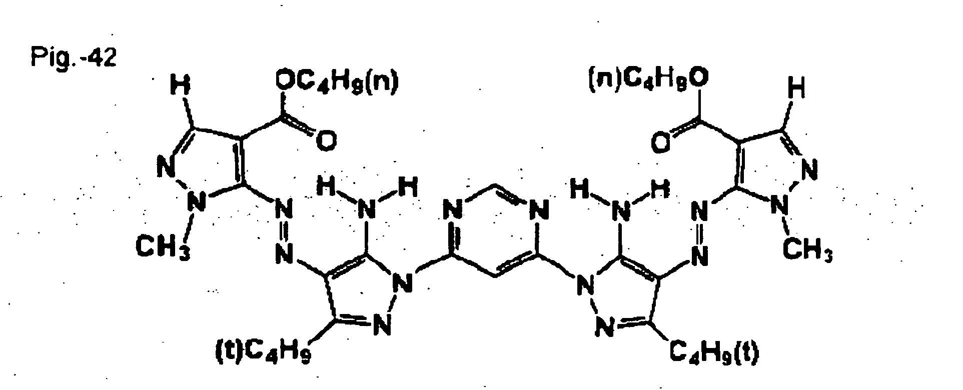

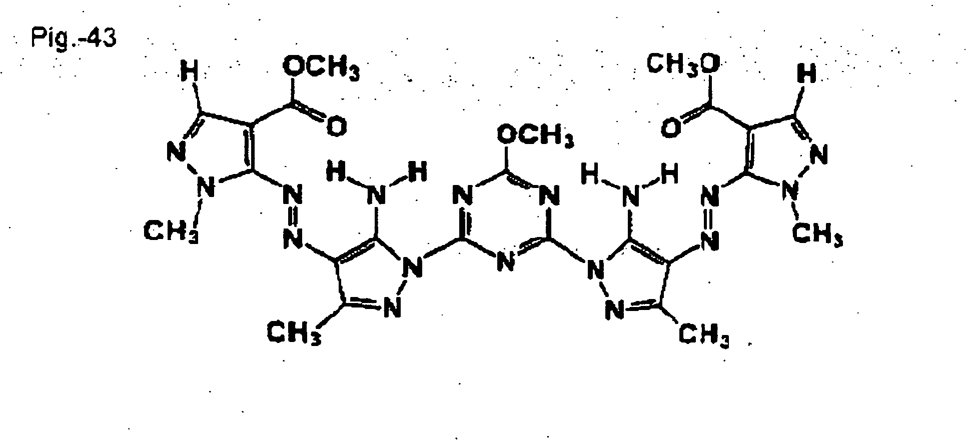

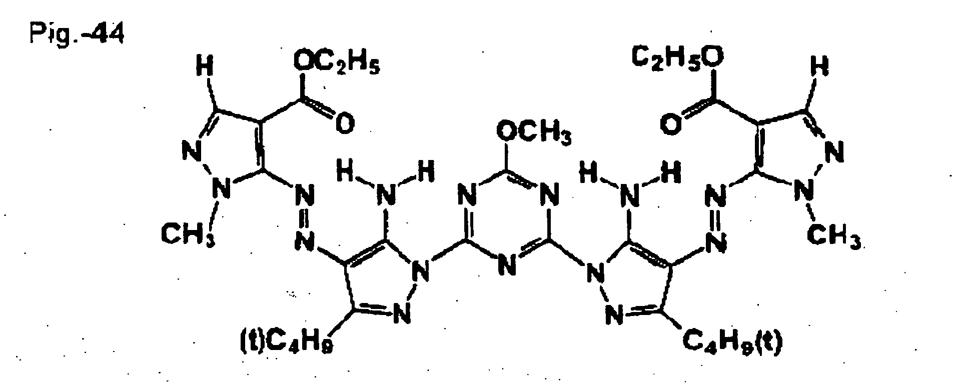

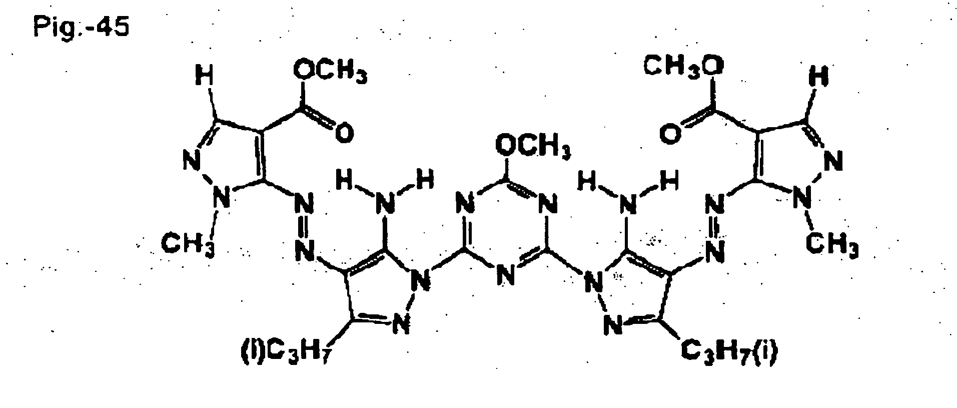

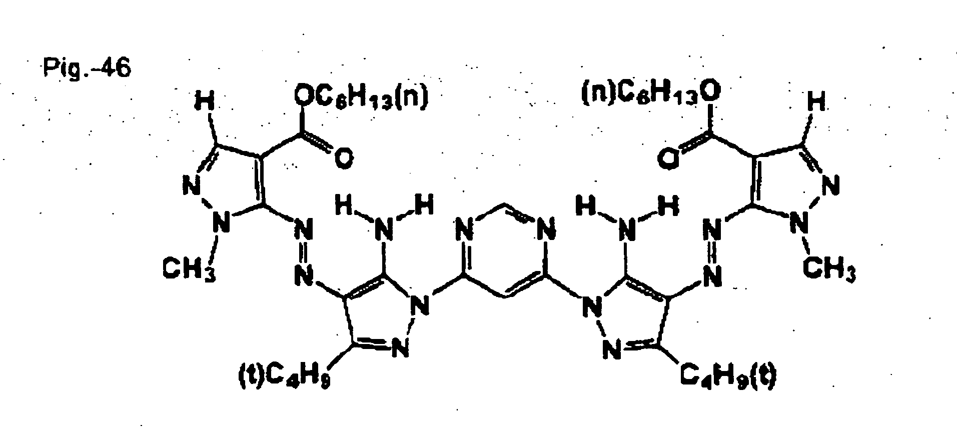

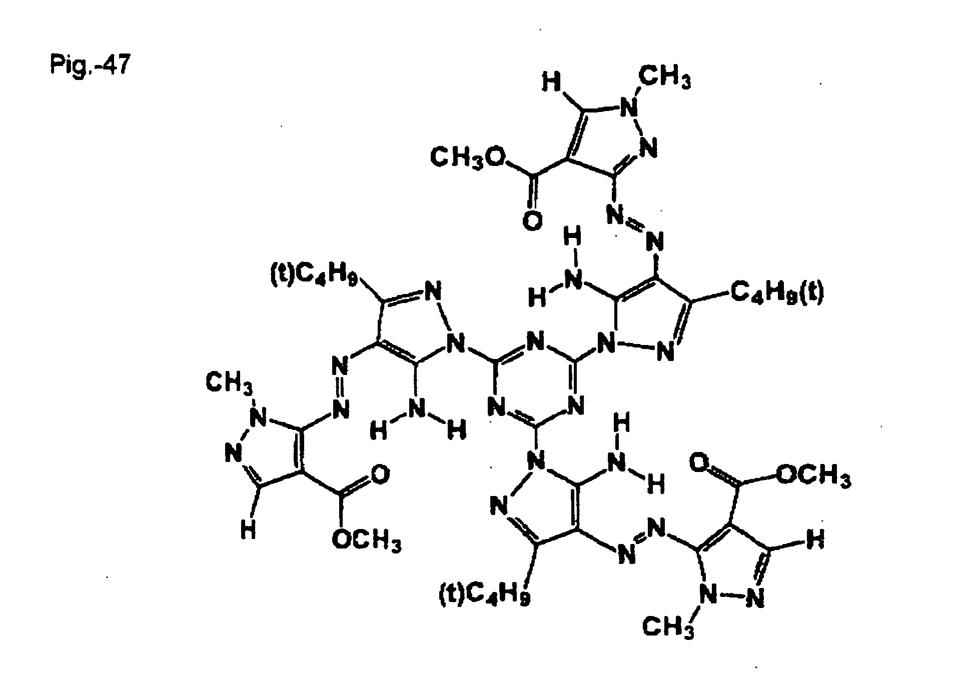

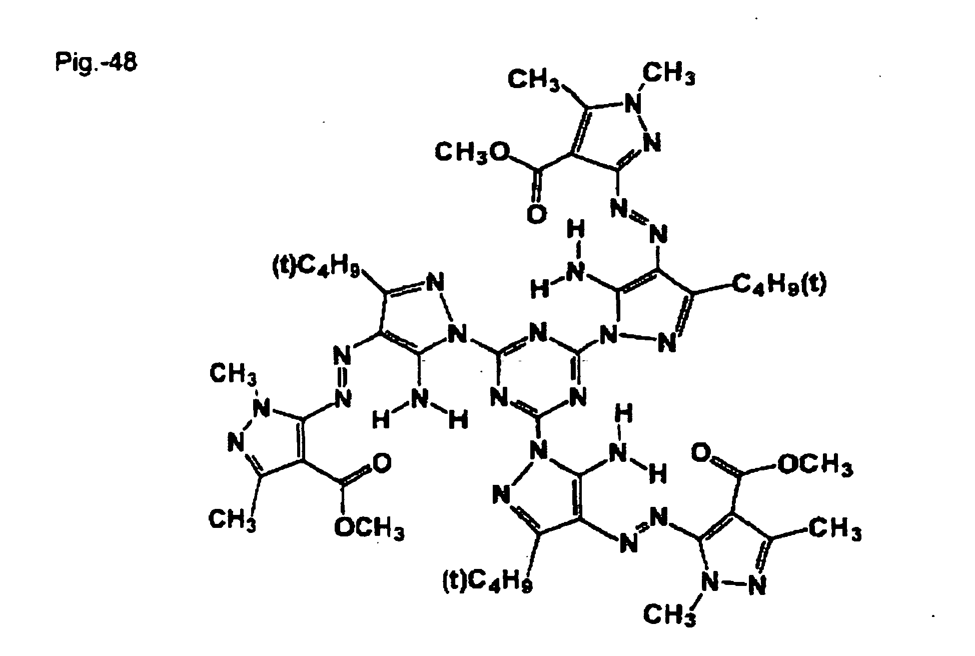

It is enough that the chemical structures of the azo pigment represented by Formulae (1) to (4) in the invention are Formula (1) or tautomers thereof. The crystalline form is not particularly limited. The pigment may have any crystalline form, for example, a so-called polymorph (crystalline polymorphism).

The term "crystalline polymorphism" means a crystal which has the same chemical composition, but whose arrangement of building block (molecule or ion) in the crystal is different. In the crystalline polymorphism, chemical and physical properties are determined by its crystal structure and each crystalline polymorphism may be distinguished based on rheology, hue, and other color characteristics. Further, a different crystalline polymorphism may be confirmed by X-Ray Diffraction (powder X-ray diffraction measurement result) or X-Ray Analysis (X-ray crystal structure analysis result).
When the crystalline polymorphism is present in the azo pigment represented by Formula (1) in the invention, the crystal form may be any polymorphism or may be a mixture of two or more polymorphisms. It is preferable that the crystal form includes a single polymorphism as a main component. That is, it is preferable that the level of the incorporation of crystalline polymorphism is small. The content of the azo pigment having a single crystal form is from 70% to 100%, preferably from 80% to 100%, more preferably from 90% to 100%, further preferably from 95% to 100%, and particularly preferably 100% based on the whole azo pigment.

When the azo pigment having a single crystal form is included as a main component, the regularity for the arrangement of pigment molecules is improved and the intramolecular and intermolecular interactions are enhanced. Thus, a high level three-dimensional network is easily formed. As a result, it is preferable from the viewpoint of performances required for the pigment such as improvement in the hue, lightfastness, heat fastness, humidity fastness, oxidizing gas fastness, and solvent resistance.
The mixing ratio of the crystalline polymorphism in the azo pigment may be confirmed by the value of the solid which is physicochemically measured by Single crystal X-ray crystal structure analysis, Powder X diffraction (XRD), Micrograph (TEM) of crystal, or IR (KBr method).

In the invention, when the azo pigment represented by Formula (1) has an acid group, a part or all of the acid groups may be a salt type; or a salt type pigment and a free acid type pigment may be mixed. Examples of the salt type include a salt of alkali metals such as Na, Li, and K; a salt of ammonium which may be substituted by an alkyl group or a hydroxyalkyl group; and a salt of organic amine. Examples of the organic amine include lower alkylamine, hydroxy-substituted lower alkylamine, carboxy-substituted lower alkylamine, and polyamine having 2 to 10 alkyleneimine units having 2 to 4 carbon atoms. In the case of the salt type, the type is not limited to one kind and a plurality of kinds may be mixed and used.

In the structure of the azo pigment to be used in the invention, when a plurality of acid groups are included in one molecule, the plurality of acid groups may be respectively the salt type or acid type or they may be different from each other.

In the invention, the azo pigment represented by Formula (1) may be a hydrate containing water molecules in the crystal and the number of water molecules in the crystal is not particularly limited.

Subsequently, an example of the production method of the azo pigment represented by Formula (1) will be described. For example, a heterocyclic amine represented by Formula (A) described below is diazotized under acid condition, which is subjected to coupling reaction with the compound represented by the following Formula (B). The resulting product is subjected to post-treatment in the ordinary manner. Thus, the azo pigment represented by Formula (1) may be produced.

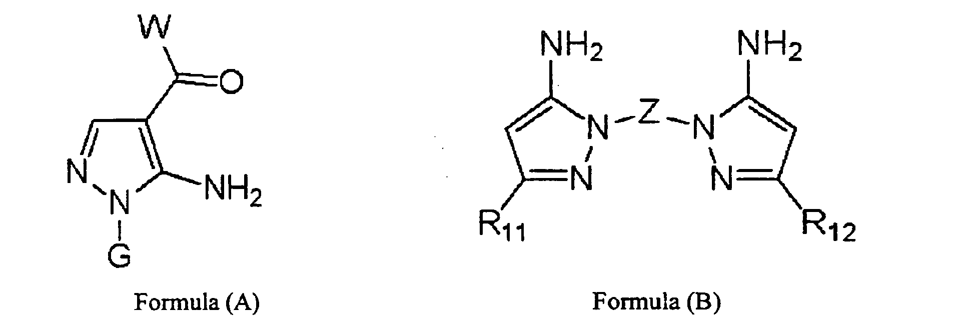

In Formula (A), W and G have the same definitions as W₁ or W₂ and G₁ or G₂ in Formula (1), respectively. R₁₁, R₁₂, and Z in Formula (B) have the same definitions as R₁₁, R₁₂, and Z in Formula (1), respectively.

The heterocyclic amine represented by Formula (A) may be generally produced by a well-known and common used method, for example, the method described in Helv. Chim. Acta, 41, 1958, 1052-1056, the method described in Helv. Chim. Acta, 42, 1959, 349-352, and the method in accordance with them.
The compound represented by Formula (B) may be produced by the methods described in PCT International publication No. 06/082669 and JP-A No. 2006-57076 or the methods based on these methods.

The diazotizing reaction of the heterocyclic amine represented by Formula (A) may be performed by allowing the heterocyclic amine to react with reagents such as sodium nitrite, nitrosylsulfuric acid, and isoamyl nitrite in an acidic solvent such as sulfuric acid, phosphoric acid, acetic acid, hydrochloric acid, or methanesulfonic acid at a temperature of 15°C or lower for about 10 minutes to about 6 hours.
The coupling reaction may be carried out by reacting the diazonium salt obtained by the above-described method with the compound represented by Formula (B) at 40°C or lower, preferably 25°C or lower for about 10 minutes to about 12 hours.

In some cases, a crystal is precipitated in the reaction liquid. Generally, a crystal is precipitated by adding water or an alcohol solvent to the reaction liquid and then the crystal may be filtered. A crystal is also precipitated by adding the reaction liquid to an alcohol solvent or water and then precipitated crystal may be filtered. The azo pigment represented by Formula (1) may be obtained by washing and drying the filtered crystal, if necessary.

The azo pigment represented by Formula (1) is obtained as a crude azo pigment by the above production method. When the azo pigment is used as the pigment of the invention, it is preferred to perform a post-treatment. Examples of the post-treatment include milling treatments such as solvent salt milling, salt milling, dry milling, solvent milling, and acid pasting; a process of controlling the pigment particles by solvent heating treatment; and a process of treating the surface with resins, surfactants, and dispersing agents.

It is preferable that the azo pigment represented by Formula (1) of the invention is subjected to solvent heating treatment and/or solvent salt milling as post-treatment.

Examples of the solvent to be used for the solvent heating treatment include water; aromatic hydrocarbon solvents such as toluene and xylene; halogenated hydrocarbon solvents such as chlorobenzene and o-dichlorobenzene; alcohol solvents such as i-propanol and i-butanol; polar aprotic organic solvents such as N,N-dimethylformamide, N,N-dimethylacetamide, and N-methyl-2-pyrrolidone; glacial acetic acid, pyridine, and mixtures thereof. Organic or inorganic acids or bases may be further added to the above-described solvents. The temperature of solvent heating treatment varies depending on the primary particle diameter of the desired pigment and the temperature is preferably from 40°C to 150°C, and further preferably from 60°C to 100°C. Further, the time for the treatment is preferably from 30 minutes to 24 hours.

An example of the solvent salt milling includes a method including the steps of placing a crude azo pigment, an inorganic salt, and an organic solvent which does not dissolve the organic salt into a kneading machine and kneading and grinding in it. As the inorganic salt, a water-soluble inorganic salt may be suitably used. Preferable examples thereof include inorganic salts such as sodium chloride, potassium chloride, and sodium sulfate. It is more preferable to use an inorganic salt having an average particle diameter of 0.5 µm to 50 µm. The amount of the inorganic salt is preferably 3 parts by mass to 20 parts by mass, more preferably 5 parts by mass to 15 parts by mass with respect to the crude azo pigment. A water-soluble organic solvent may be suitably used as the organic solvent. However, the solvent evaporates easily due to the temperature rise at the time of kneading and, thus a high-boiling-point solvent is preferable from a viewpoint of safety.

Examples of the water soluble organic solvent include diethylene glycol, glycerol, ethylene glycol, propylene glycol, liquid polyethylene glycol, liquid polypropylene glycol, 2-(methoxymethoxy) ethanol, 2-butoxyethanol, 2-(isopentyloxy) ethanol, 2-(hexyloxy) ethanol, diethylene glycol monomethyl ether, diethylene glycol monoethyl ether, diethylene glycol monobutyl ether, triethylene glycol, triethylene glycol monomethyl ether,
1-methoxy-2-propanol, 1-ethoxy-2-propanol, dipropylene glycol, dipropylene glycol monomethyl ether, dipropylene glycol monomethyl ether, dipropylene glycol, and mixtures thereof. The amount of the water-soluble organic solvent is preferably from 0.1 parts by mass to 5 parts by mass based on the crude azo pigment. The kneading temperature is preferably from 20°C to 130°C, and particularly preferably from 40°C to 110°C. Usable examples of the kneading machine include kneaders and mix maulers.

The content of the azo pigment represented by Formula (1), tautomers thereof, salts thereof or hydrates thereof in the oil-based ink composition for inkjet recording of the invention may be preferably set in a range of 0.5% by mass to 12% by mass, more preferably set in a range of 1% by mass to 10% by mass, and even more preferably set in a range of 2% by mass to 8% by mass, from the viewpoints of image density and ink stability.

### (Polymer Dispersant)

The oil-based inkjet recording ink according to the invention contains at least one of polymer dispersants. By the use of a polymer dispersant, dispersion stability of the pigment is further improved. As the polymer dispersant, dispersants generally used in oil-based inks may be arbitrarily used. "Polymer" in the invention means a resin having a weight average molecular weight of 3,000 or more.

Polymer dispersants containing a hydrophobic group in the molecule are preferred, and those insoluble in water are more preferred. Polymer dispersants containing a hydrophobic group are capable of improving the waterproofness of a recorded matter furthermore.
As the example of polymer dispersants, polyester-based dispersants having a polyester chain in the molecule are exemplified. By containing a flexible polyester chain, adsorption onto a pigment increases and dispersibility is improved. Specifically, for example, compounds obtained by the reaction of polyalkyleneimine with a polyester compound as disclosed in JP-A Nos. 54-37082 and 61-174939, compounds obtained by the modification of the amino group on the side chain of polyallylamine with polyester as disclosed in JP-A No. 9-169821, graft polymers having a polyester type macromonomer as the copolymerization component as disclosed in JP-A No. 9-171253, and polyester polyol addition polyurethane as disclosed in JP-A No. 60-166318 are preferably exemplified.

Commercially available polymer dispersants include, for example, as the above polyester-based dispersants, "SOLSPERSE" (e.g., SOLSPERSE 17000, 24000 GR, 28000, 32000, and 38500; trade name, manufactured by The Lubrizol Corporation), "DISPERBYK" (e.g., DISPERBYK-161, 162, 167, and 168; trade name, manufactured by BYK Japan KK), "EFKA" (e.g., EFKA 4047 and 4050; trade name, manufactured by EFKA Additives Inc.), and "AJISPER" (e.g., AJISPER PB711, PN411, PA111, PB821, and PB822; trade name, manufactured by Ajinomoto Fine Techno Co., Inc.).

As polymer dispersants besides the above commercially available products, polymer dispersants synthesized by copolymerization of a cationic monomer having a basic group, an anionic monomer having an acidic group, a monomer having a hydrophobic group, and, if necessary, other monomers such as a nonionic monomer and a monomer having a hydrophilic group may be used. In connection with the details of the cationic monomer, anionic monomer, monomer having a hydrophobic group, and other monomers such as a nonionic monomer and a monomer having a hydrophilic group, the monomers disclosed in JP-A No. 2004-250502, paragraph Nos. [0034] to [0036] can be exemplified.

The content of the polymer dispersant in the oil-based inkjet recording ink of the invention is preferably 10% to 100% by mass to the pigment represented by Formula (1), and more preferably 20% to 80% by mass, although the content depends upon the kinds of the pigment and solvent and the dispersion condition. When the content of the polymer dispersant is in the above range, the particle size of dispersed particles can be made smaller and dispersibility can be stabilized furthermore.

### (Organic solvent)

An oil-based inkjet recording ink of the invention includes at least one organic solvent. Example of the organic solvent includes a solvent such as an alcohol-based compound, a ketone-based compound, an ester-based compound, an amine-based compound, a glycol-based compound, a glycol erther-based compound, an aromatic compound; a hydrocarbon-based solvent; and a lactone-based compound.

As preferred organic solvents, polyoxyethylene glycol dialkyl ethers are exemplified for the reasons that they are excellent in volatilization suppression, solidification prevention, and re-solubility when solidified, of the oil-based ink in the apparatus such as a nozzle part and the inside of tube, and capable of restraining cockling of plain paper. An example of the organic solvent is preferably a polyoxyethylene glycol dialkyl ether represented by the following Formula (α):

Formula (α): R²¹-(OC₂H₄)ₗ-OR²².

In Formula (α), R²¹ and R²² each independently represent an alkyl group having 1 to 3 carbon atoms and may be the same or different from each other. 1 denotes an integer of 2 to 4.

An alkyl group having 1 to 3 carbon atoms, represented by R²¹ or R²² may be straight-chain or branched, and includes, for example, methyl group, ethyl group and propyl group.

Examples of the polyoxyethylene glycol dialkyl ether represented by Formula (α) include diethylene glycol dimethyl ether, triethylene glycol dimethyl ether, tetraiethylene glycol dimethyl ether, diethylene glycol diethyl ether, triethylene glycol diethyl ether, tetraethylene glycol diethyl ether, diethylene glycol ethyl methyl ether, triethylene glycol ethyl methyl ether, tetraethylene glycol ethyl methyl ether, diethylene glycol di-n-propyl ether and diethylene glycol di-iso-propyl ether. Among above, diethylene glycol diethyl ether, triethylene glycol dimethyl ether or diethylene glycol ethyl methyl ether is preferable.

A polyoxyethylene glycol monoalkyl ether or a polyoxypropylene glycol monoalkyl ether is also preferable as the organic solvent, from the viewpoint of excellent re-soluble property of the oil-based ink when the oil-based ink be solidified in a apparatus such as a nozzle, a tube and the like. Examples of the preferable organic solvent include a polyoxyethylene glycol monoalkyl ether represented by the following Formula (β) and/or a polyoxypropylene glycol monoalkyl ether represented by the following Formula (γ).

Formula (β): R³¹-(OC₂H₄)ₘ-OH

Formula (γ): R⁴¹-(OC₃H₆)ₙ-OH.

In Formula (β), R³¹ represents an alkyl group having 1 to 6 carbon atoms, and m denotes an integer of 3 to 6. Among the alkyl group having 1 to 6 carbon atoms, represented by R³¹, an alkyl group having 1 to 4 carbon atoms is preferable and, for example, a methyl group, an ethyl group, a propyl group or a butyl group is more preferable.
Examples of the polyoxyethylene glycol monoalkyl ether represented by Formula (β) include triethylene glycol monomethyl ether, triethylene glycol monobutyl ether, tetraethylene glycol monomethyl ether, tetraethylene glycol monobutyl ether, pentaethylene glycol monomethyl ether, thexaethylene glycol monomethyl ether and the like.

In Formula (γ), R⁴¹ represents an alkyl group having 1 to 4 carbon atoms, and n denotes an integer of 2 to 3. Among the alkyl group having 1 to 4 carbon atoms, represented by R⁴¹, a methyl group, an ethyl group, a propyl group or a butyl group is, for example, preferable.
Examples of the polyoxypropylene glycol monoalkyl ether represented by Formula (γ) include polyoxypropylene glycol monoalkyl ether, dipropylene glycol monomethyl ether, dipropylene glycol monoethyl ether, dipropylene glycol monopropyl ether, dipropylene glycol monobutyl ether, tripropylene glycol monomethyl ether and the like.

The organic solvent includes (poly)alkylene glycol monoalkyl ether monoalkanoate as a preferable solvent other than the preferable organic solvent described above. Examples of the (poly)alkylene glycol monoalkyl ether monoalkanoate include diethylene glycol monomethyl ether acetate, diethylene glycol monoethyl ether acetate, diethylene glycol monomethyl ether propionate, diethylene glycol monomethyl ether pentanoate, diethylene glycol monobutyl ether acetate, diethylene glycol monobutyl ether propionate, dipropylene glycol monomethyl ether acetate, dipropylene glycol monoethyl ether acetate, dipropylene glycol monobutyl ether acetate, dipropylene glycol monoethyl ether propionate, dipropylene glycol monoethyl ether pentanoate, triethylene glycol monomethyl ether acetate, triethylene glycol monoethyl ether acetate, triethylene glycol monobutyl ether acetate, tetraethylene glycol monomethyl ether acetate, tetraethylene glycol monoethyl ether acetate, tetraethylene glycol monobutyl ether acetate and the like. Among these, di- or tripropylene glycol-based compound is particularly preferable than di- or triethylene glycol-based compound as a solvent for the oil-based ink of the invention, from the viewpoint of a safer solvent

A boiling point of the polyoxyethylene glycol dialkyl ether is preferably 150°C or more, and more preferably 180°C or more under the atmosphere. Upper limit of the boiling point is not limited, but around 240°C from a functionality of the solvent of an inkjet ink for inkjet recording. A density at 20°C of the polyoxyethylene glycol dialkyl ether is preferably 0.9 g/cm³ or more. A polyoxyethylene glycol dialkyl ether is more preferable than a polyalkylene glycol monoalkyl ether monoalkanoate from the view points of leveling property of an ink and drying property using them as a main solvent of the oil-based ink of the invention.

A boiling point of the polyoxyethylene glycol monoalkyl ether is preferably 200°C to 305°C, and more preferably 240°C to 305°C under the atmosphere from the view point of imparting to an ink suppressed volatile property.
A boiling point of the polyoxypropylene glycol monoalkyl ether is preferably 170°C to 245°C, and more preferably 180°C to 240°C under the atmosphere from the view point of imparting to an ink suppressed volatile property.

From the view point of imparting to an ink suppressed volatile property, triethyl citrate is also preferably used as the organic solvent for the oil-based ink of the invention.

It is preferred to use an organic solvent having a flash temperature of 70°C or higher from the viewpoint that the flash temperature of the oil-based ink is set at 70°C or higher. By the design to raise the level of the oil-based ink to flame resistant dangerous material,
flash resistant petroleum, or higher, dangerousness such as flash ignition is reduced, and the oil-based ink can be relatively easily handled. When the flash temperature of the oil-based ink is made 70°C or higher, it is classified to a flame resistant dangerous material, flash resistant petroleum, or higher, listed in the classified list of fire protection law, as a result it becomes to be easily handled in manufacture, preservation, and transportation. Further, in troubles such as leakage, dangerousness of flash ignition is also restrained. When the flash temperature of the organic solvent is lower than 70°C, the flash temperature of the ink as a whole is difficult to be raised to 70°C or higher even by the addition of other solvents having higher flash temperatures. However, if the flash temperature of the main solvent is 70°C or higher, even when another solvent having a flash temperature of lower than 70°C is added, the flash temperature of the ink as a whole can be easily designed to be 70°C or higher by the adjustment of the addition amount of the organic solvent to be added.
Further, the main solvent having a flash temperature of 70°C or higher has a boiling temperature of 150°C or higher and vapor pressure at 20°C of 5 mmHg or lower, so that excellent working environment can be obtained.

### - Hydrocarbon-Based Solvent -

In the invention, a hydrocarbon-based solvent may be used in addition to the above organic solvents, or separately. By the addition of a hydrocarbon-based solvent, the solubility in a solvent of a pigment dispersant and a resin having an affinity to the organic solvent is a little reduced, the adsorption onto the pigment is improved, the flowability of the ink increases, and preservation stability can be heightened. When a hydrocarbon-based solvent having such effects is used, the content of the hydrocarbon-based solvent is determined so that the flash temperature of the ink is not lower than 70°C. The content is generally preferably 1% to 30% by mass with respect to a total mass of the organic solvents, and more preferably 3% to 20% by mass.

A hydrocarbon-based solvent is a compound formed of carbon atoms and hydrogen atoms alone. A hydrocarbon-based solvent is generally a distillate from a natural or synthetic hydrocarbon mixture consisting of a single component or a mixture, and alkane, alkene, alkyne, cycloalkane and aromatic hydrocarbon are included by each molecular structure. As such hydrocarbon-based solvents, for example, paraffin such as normal paraffin and isoparaffin, naphthene, and paraffin/naphthene mixed solvent are exemplified. The property of the hydrocarbon-based solvents may be a fluid state or a solid state. Of the above, isoparaffin-based solvents, normal paraffin-based solvents, fluidized paraffin-based solvents, and paraffin/naphthene-based solvents are preferred, and their commercial products are easily available.

The specific examples of hydrocarbon-based solvents include isoparaffin-based solvents ISOPAR G, H, L and M, NOPAR 12, 13 and 15;trade name, and paraffin/naphthene mixed solvent EXONOL D110 and D130 (trade name, all manufactured by Exxon Chemical), isoparaffin-based solvents IP SOLVENT 16, 20 and 2028 (trade name, all manufactured by Idemitsu Petrochemical Co., Ltd.), normal paraffin-based solvents NORMAL PARAFFIN SL, L, M and H, O-type solvents L, M and H (trade name), isoparaffin-based solvents ISOSOL 300 and 400 (trade name), naphthene-based solvents AF-4, AF-7, AF-5, and AF-6 (trade name), TECLEAN N16, N20, and N22 (trade name), paraffin-based solvents DRY SOLVENT, DRY SOLVENT HIGH SOFT, CLEANSOL, MINERAL SPIRIT A, A SOLVENT, and HIGHALOM 2S (trade name, all manufactured by Nippon Petrochemicals Co., Ltd.), isoparaffin-based solvent MARKASOL R (trade name, manufactured by Maruzen Petrochemical Co., Ltd.), paraffin-based solvents IDEMITSU SUPER SOL LA25, LA30, LA35, LA41, FP20, FP25, FP30, FP38, and CA25, and DIANA FRESIA P02, P05, and S02 (trade name, all manufactured by Idemitsu Kosan Co., Ltd.), isoparaffin-based solvents SHELL SOL 71 and 72 (trade name), and paraffin-naphthene mixture-based solvent SHELL SOL D100 (trade name, all manufactured by Shell Japan, Ltd.), and liquid paraffin-based solvents MORESCO WHITE P-40, P-55, P-60, P-70, P-80, P-100, P-120, P-150, P-200, P-230, P-260, P-300, and P-305P, and MORESCO BIOLESS (trade name, all manufactured by Matsumura Oil Research Corp.).

Hydrocarbon solvents may be used by one kind alone, or two or more may be used as mixture.

By the addition of these hydrocarbon-based solvents each having a low molecular weight to the ink, flowability can be heightened, and contrary to this, by the addition of those having a high molecular weight to the ink, the flash temperature is made high, so that safety can be increased. It is preferred that the flash temperature of the hydrocarbon-based solvent is a temperature not too low so as to be capable of maintaining safety, and the molecular weight of the hydrocarbon-based solvents is high to a certain degree not to damage the flowability of the ink from the viewpoints of the ejecting ability of ink while restraining head clogging due to drying property improvement, the solubility of the pigment dispersant and resin, and dispersibility. The flash temperature of the hydrocarbon-based solvents is preferably 70°C or higher for safety.

The organic solvent in the invention may be a mixed solvent consisting of polyoxyethylene glycol dialkyl ether, polyoxyethylene glycol monoalkyl ether, or polyoxypropylene glycol monoalkyl ether to which is added other generally used solvent such as water, an alcohol compound, a ketone compound, an ester compound, an amine compound, a glycol compound, a glycol ether compound, or an aromatic compound. In this case, the amounts of water and the alcohol compounds to be used in combination may be optionally selected in accordance with each solvent by well considering the physical properties and safety.

### - Lactone-Based Solvent -

Further, a lactone-based solvent may be used in the invention. The lactone-based solvent is a compound having a cyclic structure by ester bonding, and γ-lactone of a 5-membered structure, δ-lactone of a 6-membered structure, and ε-lactone of a 7-membered structure are known. As the lactone solvents, e.g., γ-butyrolactone, γ-valerolactone, γ-hexalactone, γ-heptalactone, γ-octalactone, γ-nonalactone, γ-decalactone, γ-undecalactone, δ-valerolactone, δ-hexalactone, δ-heptalactone, δ-octalactone, δ-nonalactone, δ-decalactone, δ-undecalactone, and ε-caprolactone are exemplified.

Among the lactone-based solvents, γ-lactone of a 5-membered structure is preferred in the point of excellent permeability to a polyvinyl chloride base material, and γ-butyrolactone and γ-valerolactone are more preferred.

In a mixed solvent of the organic solvent and the lactone solvent in combination, the proportion of each solvent in the mixed solvent is 0.02 parts to 4 parts by mass of the lactone-based solvent with respect to 1 part by mass of polyoxyethylene glycol dialkyl ether represented by Formula (α), and preferably 0.05 parts to 2 parts by mass.

The content of the organic solvents in the oil-based inkjet recording ink of the invention is 50% by mass or more, and more preferably 70% by mass or more. When the proportion of the organic solvents is in the above range, the dispersion stability of the pigment is bettered, and excellent permeability to a polyvinyl chloride base material, leveling property and drying property of the image part are ensured.

### (Resin)

The oil-based inkjet recording ink in the invention contains at least one of resins. The abrasion resistance of the image can be further improved by containing a resin.

Anionic resins are exemplified as the resins to be contained. The anionic resins preferably have an acid value of 5 mg KOH/g to 150 mg KOH/g, more preferably 20 mg KOH/g to 100 mg KOH/g, and even more preferably 30 mg KOH/g to 80 mg KOH/g. When the acid value is 5 mg KOH/g or more, the affinity of the resin with the pigment and the surface of the medium is bettered, and when it is 150 mg/KOH/g or less, the improving effect of abrasion resistance is effectively obtained while suppressing the viscosity of ink.

The anionic resins preferably have a weight average molecular weight of 5,000 to 100,000, more preferably 8,000 to 60,000, and still more preferably 10,000 to 30,000. When the molecular weight is 5,000 or more, an effect of stereoscopic repulsion is liable to be obtained when anionic resin is adsorbed onto the pigment particles in the ink, further, preservation improving effect increases and the strength of the image part is improved. While when the molecular weight is 100,000 or less, the flowability of ink can be maintained with suppressing the viscosity of ink. Incidentally, the weight average molecular weight is measured as polystyrene equivalent molecular weight by gel permeation chromatography.

The anionic resins are preferably resins having an acryloyl group or a methacryloyl group, and resins having a polyether structure containing at least one of a polyoxyethylene structure and a polyoxypropylene structure. The resins having an acryloyl group or a methacryloyl group are (meth)acrylic resins. From the point that excellent adhesion of pigment dispersion to a polyvinyl chloride base material is secured, a homopolymer of methyl methacrylate and a copolymers of methyl methacrylate and butyl methacrylate are preferred.
Further, the polyether structure has good affinity with the organic solvent and is excellent in dispersion stability of the pigment and capable of heightening the fixing property of a recorded matter. As such anionic resins, resins synthesized by copolymerization of a macromonomer having a polyether structure and an anionic monomer, and if necessary, other monomers such as cationic monomer, nonionic monomer, hydrophobic monomer, or hydrophilic monomer can be used. As the macromonomer having a polyether structure, macromonomers having methoxypolyethylene glycol or methoxypolypropylene glycol bonded directly or via an alkyl group to an acryloyl group or a methacryloyl group are preferably used. As other monomers such as the anionic monomer, the same monomers exemplified above as the monomers for synthesizing polymer dispersant are preferably used. As the anionic resins, (meth)acrylic resins obtained by copolymerization of these monomers are preferably used.

As the macromonomer having a polyether structure, various macromonomers are commercially available, for example, PE-200, PE-350, AE-200, AE-350, AP-400, AP-550, AP-800, 70PEP-350B, 10PEP-550B, AEP, 50POEP-800B, 50AOEP-800B, PLE, ALE, PSE, ASE, PNE, ANE, PNP, ANP, PNEP-600, PME-200, PME-400, PME-1000, AME-400, PP-500, PP-800, and PP-1000 (trade name, all manufactured by Nippon Oils and Fats Co., Ltd.), AMP-10G, AMP-20G, AMP-60G, and AM-90G (trade name, all manufactured by Shin-Nakamura Chemical Co., Ltd.), Viscoat #355HP, Viscoat #310, Viscoat #310HP, Viscoat #310HG, Viscoat #312, and Viscoat #700 (trade name, all manufactured by Osaka Organic Chemical Industry Co., Ltd.), Light Acrylate EHDG-A, Light Acrylate EC-A, Light Acrylate MTG-A, Light Acrylate 130A, Light Acrylate P-200A, Light Acrylate NP-4EA, Light Acrylate NP-8EA, Light Ester MC, Light Ester 130MA, and Light Ester 041MA (trade name, all manufactured by Kyoeisha Chemical Co., Ltd.), NK Ester M-20G, NK Ester M-40G, and NK Ester M-90G (trade name, all manufactured by Shin-Nakamura Chemical Co., Ltd.), and ADEKALIA SOAP NE-10, ADEKALIA SOAP NE-20, and ADEKALIA SOAP NE-40 (trade name, all manufactured by Adeka Corporation) are exemplified.

The content of the resins in the oil-based inkjet recording ink is preferably 10% to 200% by mass with respect to the total amount of pigments including the pigment represented by Formula (1), more preferably 15% to 150% by mass, and even more preferably 20% to 100% by mass. When the content of the resins is 10% by mass or more, the proportion to the pigments is good and stable fixing property is obtained, while when the content is 200% by mass or less, viscosity of the ink is restrained.

The solids content of the ink consisting of the resin and pigment in the oil-based inkjet recording ink of the invention is preferably 1% to 20% by mass, and more preferably 2% to 15% by mass.

In addition to the above components, if necessary, any of known additives such as a surfactant, a surface adjustor, a leveling agent, a defoaming agent, an antioxidant, a pH adjustor, a charge applying agent, a sterilizer, an antiseptic, a deodorant, a charge adjustor, a wetting agent, a skimming preventive, a perfume, and a pigment derivative may be added to the oil-based inkjet recording ink of the invention as optional components.

Manufacturing method of the oil-based inkjet recording ink of the invention is not especially restricted. The oil-based inkjet recording ink may be manufactured by stirring, mixing and dispersing each component with a container-driving medium mill, e.g., a ball mill, a centrifugal mill, or a planetary ball mill, a high speed rotary mill, e.g., a sand mill, a medium stirring mill, e.g., a stirring vessel-type mill, or a simple disperser, e.g., Disper. The addition order of each component is arbitrary. Preferably, the azo pigment represented by Formula (1), the polymer dispersant and the organic solvent are pre-mixed and dispersed, and the resulting dispersion is mixed with the resin (e.g., the anionic resin) and the organic solvent. In this case, the dispersion is mixed homogeneously with a simple stirrer, e.g., a three-one motor, a magnetic stirrer, Disper, or a homogenizer at the time of stirring or after stirring. Alternatively, mixing may be performed with a line mixer and the like. Further, for the purpose of making dispersed particles finer, they may be mixed with a disperser such as a bead mill and a high pressure injection mill. According to the kinds of pigments and polymer dispersants, anionic resins may be added at the time of pre-mixing before pigment dispersion.

It is preferred for the oil-based inkjet recording ink of the invention to have surface tension of 20 mN/m to 40 mN/m at 25°C. The surface tension is measured with AUTOMATIC SURFACE TENSIOMETER CBVP-Z (trade name, manufactured by Kyowa Interface Science Co., Ltd.) on the condition of ink at 25°C. Viscosity of the ink is preferably 1 mPa·S to 20 mPa·S, and more preferably 3 mPa·S to 15 mPa·S. The viscosity is measured with VISCOMETER TV-22 (trade name, manufactured by TOKI SANGYO CO., LTD.) on the condition of ink at 25°C.
The dispersion average particle size of pigment particles in the oil-based inkjet recording ink is preferably 50 nm to 150 nm as the volume basis average particle size D₅₀, and more preferably 60 nm to 100 nm. When D₅₀ is 50 nm or more, a recorded matter having suitable light fastness is obtained, and when it is 150 nm or less, good ejecting ability is secured, and a precious printed matter having higher resolution is obtained.
These physical properties can be easily adjusted by selecting the organic solvents and arbitrarily regulating the kinds and amount of other components.
This application is intended to refer entire disclosure of Japanese Patent Application No. 2009-068821 filed on March 19, 2009, and to claim merit of the priority of it.

### EXAMPLES

Hereinafter, the invention is described in more detail with reference to examples, but the invention is not limited to the examples as long as no exceeding of the subject matter of the invention. Further, "parts" and "%" are expressed in terms of mass, unless otherwise specified.

### (Pigment Synthesis)

### [Synthesis example 1]

### -Synthesis of exemplified compound (Pig.-1)-

Among the compounds represented by Formula (1), the synthetic scheme of the exemplified compound (Pig.-1) is shown below.

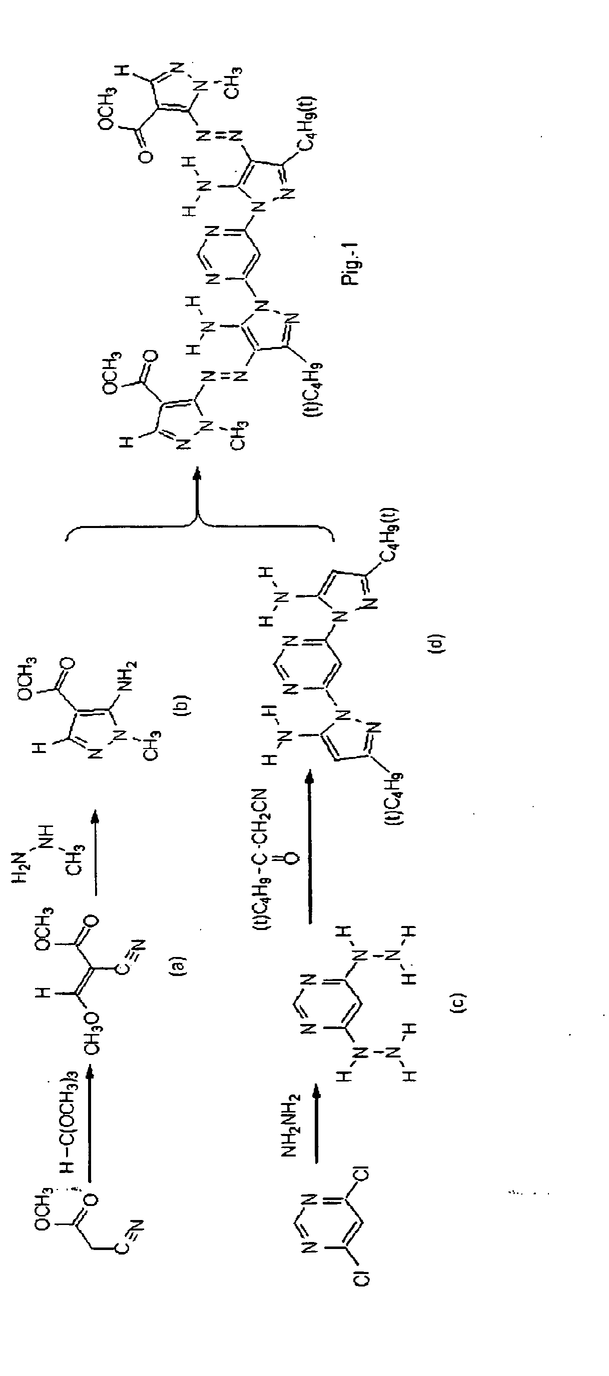

### (1) Synthesis of intermediate (a)

42.4 g (0.4 mol) of trimethyl orthoformate, 20.4 g (0.2 mol) of acetic anhydride, and 0.5 g of p-toluenesulfonic acid were added to 29.7 g (0.3 mol) of methyl cyanoacetate, which was heated at 110°C (outside temperature) and then stirred for 20 hours while a low-boiling-point component formed from the reaction system was distilled away. The reaction liquid was concentrated under reduced pressure. Thereafter, the resulting product was purified on a silica gel column, and 14.1 g of the intermediate (a) (yellow powder, yield: 30%) was obtained. The results of NMR measurement of the obtained intermediate (a) are shown below.
¹H-NMR (300MHz, CDCl₃) 7.96(s,1H), 4.15(s,3H), 3.81(s,3H)

### (2) Synthesis of intermediate (b)

150 mL of i-propanol was added to 7.4 mL (141 mmol) of methylhydrazine, which was cooled to 15°C (inside temperature). 7.0 g (49.6 mmol) of the intermediate (a) was gradually added to the mixed solution, which was then heated at 50°C and stirred for 1 hour and 40 minutes. The reaction liquid was concentrated under reduced pressure. Thereafter, the resulting product was purified on a silica gel column, and 10.5 g of the intermediate (b) (white powder, yield: 50%) was obtained. The results of NMR measurement of the obtained intermediate (b) are shown below.
¹H-NMR (300MHz, CDCl₃) 7.60(s,1H), 4.95(brs,2H), 3.80(s,3H), 3.60(s,3H)

### (3) Synthesis of intermediate (c)

100 mL of methanol was added to 130 mL of hydrazine monohydrate, which was cooled to 10°C (inside temperature). 50.0 g (336 mmol) of 4,6-dichloropyrimidine was gradually added to the mixed solution (inside temperature: 20°C or lower), which was then heated at 50°C and stirred for 4 hours and 30 minutes. A crystal precipitated from the reaction liquid was filtered, washed with i-propanol, and dried. Thereby, 43.1 g of the intermediate (c) (white powder, yield: 92%) was obtained. The results of NMR measurement of the obtained intermediate (c) are shown below.
¹H-NMR (300MHz, d₆-DMSO) 7.82(s,1H), 7.55(s,2H), 5.96(s,1H), 4.12(s,4H)

### (4) Synthesis of intermediate (d)

900 mL of water was added to 35.0 g (0.25 mol) of the intermediate (c) and 68.8 g (0.55 mol) of pivaloylacetonitrile, which was stirred at room temperature. 1 M hydrochloric acid aqueous solution was added dropwise into the suspension so as to give the pH of 3, which was then heated at 50°C and stirred for 8 hours.

8 M potassium hydroxide aqueous solution was added dropwise into the reaction liquid, so as to adjust the pH to 8. Further, 1 M hydrochloric acid aqueous solution was added dropwise thereto so as to give the pH of 6. The precipitated crystal was filtered, washed with i-propanol, and dried. Thereby, 83.0 g of the intermediate (d) (white powder, yield: 94%) was obtained. The results of NMR measurement of the obtained intermediate (d) are shown below.
¹H-NMR (300MHz, d₆-DMSO) 8.73(s,1H), 7.97(s,1H), 6.88(s,4H), 5.35(s,2H), 1.22(s,18H)

### (5) Synthesis of exemplified compound (Pig.-1)

18.5 mL of acetic acid was added to 4.1 mL of concentrated sulfuric acid, which was cooled on ice and stirred. 3.85 g (12.1 mmol) of 40% nitrosylsulfuric acid was added dropwise thereto. 1.71 g (11.0 mmol) of the intermediate (b) was gradually added to the mixed solution (inside temperature: 0°C or lower), which was then stirred at 0°C for 2 hours. 150 mg of urea was added to the reaction liquid, which was stirred at 0°C for 15 minutes to prepare a diazo solution A.

50 mL of methanol was added to the intermediate (d), which was heated and dissolved. Then, the resulting mixed solution was cooled on ice and stirred. The diazo solution A was slowly added dropwise to the mixed solution (inside temperature: 10°C or lower). The reaction liquid was stirred at room temperature for 2 hours. A crystal precipitated was filtered, washed with methanol. Thereby, a crude crystal of the exemplified compound (Pig.-1) was obtained. Further, water was added to the crude crystal, which was stirred. The pH of the suspension was adjusted to 7 using a sodium hydroxide aqueous solution. 20 mL of dimethylacetamide was added thereto and stirred at 80°C for 2 hours. A crystal precipitated was filtered and was suspended and washed with methanol. The obtained crystal was filtered and dried to give 2.0 g of the exemplified compound (Pig.-1) (yellow powder, yield: 79%).

### [Synthesis example 2]

Exemplified compounds (Pig.-5), (Pig.-18), and (Pig.-19) were also synthesized as the compounds represented by Formula (1), in a manner substantially similar to the synthetic scheme described above.

### (Example 1)

### - Preparation of yellow pigment dispersion -

The components of the following composition were mixed and stirred homogeneously by using a dissolver, and the obtained pre-dispersion was further dispersed with 0.1 mmϕ zirconia beads in a vertical beads mill (READY MILL; trade name, manufactured by Aimex Co., Ltd.) for 3 to 6 hours to prepare yellow pigment dispersion YP-1.

### <Composition of yellow pigment dispersion YP-1>

| | |
|---|---|
| · Exemplified compound (Pig.-1, azo pigment represented by Formula (1)) | 20.0 parts |
| · Solsperse 32000 (trade name, manufactured by Nippon Lubrisol, Ltd., Japan, polyester compound) | 12.0 parts |
| · Diethylene glycol diethyl ether | 68.0 parts |

### - Measurement of particle size of yellow dispersion -

With respect to the obtained yellow pigment dispersion YP-1, a volume basis average particle size D₅₀ was measured using a particle size distribution measuring device LA910 (trade name, manufactured by Horiba, Ltd.), which is based on a light scattering diffraction system, and evaluation was performed according to the following evaluation criteria.

### <Criteria of evaluation>

A: D₅₀ is less than 100 nm.
B: D₅₀ is 100 nm or more and less than 150 nm.
C: D₅₀ is 150 nm or more.

### - Preparation of oil-based ink -

In the next place, oil-based ink YI-1 was prepared by mixing the components of the following composition by using the obtained yellow pigment dispersion YP-1.

### <Composition of oil-based ink YI-1>

| | |
|---|---|
| · Yellow pigment dispersion YP-1 | 25.0 parts |
| · Dipropylene glycol monomethyl ether | 18.0 parts |
| (flash temperature: 74°C, boiling temperature: 190°C) | |
| · Diethylene glycol diethyl ether | 30.5 parts |
| (flash temperature: 71°C, boiling temperature: 189°C) | |
| · Tetraethylene glycol monobutyl ether | 6.5 parts |
| (flash temperature: 143°C, boiling temperature: 278°C) | |
| · γ-Butyrolactone (lactone-based solvent) | 15.0 parts |
| (flash temperature: 98°C, boiling temperature: 203°C) | |
| · Elvacite 2013 (resin) | 5.0 parts |
| (trade name, manufactured by Du Pont; methyl methacrylate/butyl methacrylate copolymer) | |

### - Evaluation -

With respect to the obtained oil-based ink YI-1, the following measurements and evaluations were carried out. The results of measurements and evaluations are shown in Table 1 below.

### (1. Stability of ink)

The obtained oil-based ink YI-1 was put in a PET container and sealed. The container was preserved in a thermostatic chamber at 60°C for 14 days, and the viscosity and average particle size after preservation were measured. The viscosity and average particle size of oil-based ink YI-1 before preservation were also measured in the same manner. The viscosity was measured with R100 viscometer (trade name, manufactured by Toki Sangyo Co., Ltd.) under a condition of a revolution speed of the cone of 20 rpm at a temperature of 25°C. With respect to the average particle size, volume basis average particle size D₅₀ was measured by using a particle size distribution measuring device LA910 (trade name, manufactured by Horiba, Ltd.), which is based on a light scattering diffraction system. The stability of ink was evaluated according to the following evaluation criteria with each measured value as the index. The results of evaluation are shown in Table 1 below.

### <Criteria of evaluation>

A: Both viscosity and average particle size are within ±6% of the value before preservation.
B: Either viscosity or average particle size exceeds ±6% of the value before preservation.

### (2. Recoverability of ejection)

The obtained oil-based ink YI-1 was put in a PET container and sealed. The container was preserved in a thermostatic chamber at 60°C for 14 days. As the recording medium, "KASSAI PHOTO-FINISH PRO" (trade name, manufactured by FUJIFILM CORPORATION) was used. As the inkjet printer, an inkjet printer equipped with a prototype print head of 600 dpi, 256 nozzles was prepared. Oil-based ink YI-1 obtained by preservation in a thermostatic chamber at 60°C for 14 days was loaded into the inkjet printer. After ejection from the head for 30 minutes, pressure of 15 KPa was applied to the head for 10 seconds as maintenance work, and then the head was wiped with clean wiper FF-390c (trade name, manufactured by Kuraray Co., Ltd.) and followed by ejection for further 5 minutes. After elapse of 5 minutes, solid recording and fine line recording were performed on the above recording medium (KASSAI PHOTO-FINISH PRO), and the obtained image (5 cm × 5 cm) was observed. The observed image was visually evaluated according to the following criteria of evaluation.

### <Criteria of evaluation>

A: Occurrence of the lack of dots due to generation of blank area is not observed and good image is obtained.
B: Image failure such as the occurrence of lack of dots due to generation of blank area is observed a little but in a practicable degree.
C: Lots of image failures such as the occurrence of lack of dots due to generation of blank area are observed.

### (3. Adhesion to vinyl chloride resin sheet)

An inkjet printer equipped with a prototype print head of 600 dpi, 256 nozzles was prepared as inkjet printer similarly to the evaluation of the above item "2. Recoverability of ejection". Oil-based ink YI-1 was loaded into the inkjet printer and printing was performed on a polyvinyl chloride film (VIEWCAL 900; trade name, manufactured by Lintec Corporation). Abrasion test was performed on the recorded surface (recorded image) under the condition of the load of 200 g and 50 times of going and returning with test cloth (unbleached muslin No. 3) and a rubbing tester (model AB301; trade name, manufactured by Tester Sangyo Co., Ltd), and the presence of peeling off of the ink was visually evaluated according to the following criteria of evaluation. The results of evaluation are shown in Table 1 below.

### <Criteria of evaluation>

A: Peeling off of the ink is not observed.
B: Peeling off of the ink is observed a little but in a practicable degree.
C: Peeling off of the ink is conspicuously observed in an impracticable degree.

### (4. Waterproofness of plain paper)

An inkjet printer equipped with a prototype print head of 600 dpi, 256 nozzles was prepared as inkjet printer similarly to the evaluation of the above item "2. Recoverability of ejection". Oil-based ink YI-1 was loaded into the inkjet printer and fine lines were recorded on "KASSAI PHOTO-FINISH PRO" (trade name, manufactured by FUJIFILM CORPORATION), and the recorded matter was immersed into ion exchanged water at 40°C for 24 hours. After immersion, the presence of blurring of fine lines was visually observed and evaluated according to the following criteria of evaluation. The results of evaluation are shown in Table 1 below.

### <Criteria of evaluation>

A: Blurring is not observed.
B: Blurring is observed a little but in a practicable degree.
C: Blurring is observed.

### (Cockling)

An inkjet printer equipped with a prototype print head of 600 dpi, 256 nozzles was prepared as inkjet printer similarly to the evaluation of the above item "2. Recoverability of ejection". Oil-based ink YI-1 was loaded into the inkjet printer and solid recording was performed on "KASSAI PHOTO-FINISH PRO" (trade name, manufactured by FUJIFILM CORPORATION). After drying, the presence of cockling (undulation) of the solid image part was visually observed. The observed image was evaluated according to the following criteria of evaluation. The results of evaluation are shown in Table 1 below.

### <Criteria of evaluation>

A: Occurrence of cockling (undulation) is not observed.
B: Occurrence of cockling (undulation) is observed a little but in a practicable degree.
C: Occurrence of cockling (undulation) is conspicuous in an impracticable degree.

### (Example 2)

An oil-based ink was prepared and evaluated in a manner substantially similar to those in Example 1 except that the exemplified compound (Pig.-1) as pigment in Example 1 was replaced with the exemplified compound (Pig.-18, azo pigment represented by Formula (1)). The results of measurements and evaluations are shown in Table 1 below.

### (Example 3)

An oil-based ink was prepared and evaluated in a manner substantially similar to those in Example 1 except that the exemplified compound (Pig.-1) as pigment in Example 1 was replaced with the exemplified compound (Pig.-47, azo pigment represented by Formula (1)). The results of measurements and evaluations are shown in Table 1 below.

### (Example 4)

Yellow pigment dispersion YP-4 was prepared in a manner substantially similar to that in Example 1 except that diethylene glycol diethyl ether (flash temperature: 71 °C, boiling temperature: 189°C) as a dispersing solvent in the yellow pigment dispersion YP-1 in Example 1 was replaced with triethylene glycol diethyl ether (flash temperature: 111°C, boiling temperature: 216°C). Then, oil-based ink YI-4 having the following composition was prepared by using the obtained yellow pigment dispersion YP-4, followed by measurements and evaluations of the oil-based ink YI-4 in a manner substantially similar to those in Example 1, except that the oil-based ink YI-1 in Example 1 was replaced with the oil-based ink YI-4. The results of measurements and evaluations are shown in Table 1 below.

### <Composition of oil-based ink YI-4>

| | |
|---|---|
| · Yellow pigment dispersion YP-4 | 25.0 parts |
| · Dipropylene glycol monomethyl ether | 18.0 parts |
| (flash temperature: 74°C, boiling temperature: 190°C) | |
| · Triethylene glycol diethyl ether | 30.5 parts |
| (flash temperature: 111°C, boiling temperature: 216°C) | |
| · Triethylene glycol monomethyl ether | 6.5 parts |
| (flash temperature: 138°C, boiling temperature: 249°C) | |
| · γ-Valerolactone (lactone-based solvent) | 15.0 parts |
| (flash temperature: 81°C, boiling temperature: 205-208°C) | |
| · Elvacite 2013 (resin) ··· | 5.0 parts |
| (trade name, manufactured by Du Pont; methyl methacrylate/butyl methacrylate copolymer) | |

### (Example 5)

Yellow pigment dispersion YP-5 was prepared in a manner substantially similar to that in Example 1 except that diethylene glycol diethyl ether (flash temperature: 71 °C, boiling temperature: 189°C) as a dispersing solvent in the yellow pigment dispersion YP-1 in Example 1 was replaced with tripropylene glycol dimethyl ether (flash temperature: 104°C, boiling temperature: 215°C). Then, oil-based ink YI-5 having the following composition was prepared by using the obtained yellow pigment dispersion YP-5, followed by measurements and evaluations of the oil-based ink YI-5 in a manner substantially similar to those in Example 1, except that the oil-based ink YI-1 in Example 1 was replaced with the oil-based ink YI-5. The results of measurements and evaluations are shown in Table 1 below.

### <Composition of oil-based ink YI-5>

| | |
|---|---|
| · Yellow pigment dispersion YP-5 | 25.0 parts |
| · Dipropylene glycol monomethyl ether | 18.0 parts |
| (flash temperature: 74°C, boiling temperature: 190°C) | |
| · Tripropylene glycol dimethyl ether | 30.5 parts |
| (flash temperature: 104°C, boiling temperature: 215°C) | |
| · Triethyl citrate | 6.5 parts |
| (flash temperature: 151 °C, boiling temperature: 294°C) | |
| · ε-caprolactone (lactone-based solvent) | 15.0 parts |
| · Elvacite 2013 (resin) | 5.0 parts |
| (trade name, manufactured by Du Pont; methyl methacrylate/butyl methacrylate copolymer) | |

### (Example 6)

Yellow pigment dispersion YP-6 was prepared in a manner substantially similar to that in Example 1 except that diethylene glycol diethyl ether (flash temperature: 71°C, boiling temperature: 189°C) as a dispersing solvent in the yellow pigment dispersion YP-1 in Example 1 was replaced with ethylene glycol monobutyl ether acetate (flash temperature: 83°C, boiling temperature: 192°C). Then, oil-based ink YI-6 having the following composition was prepared by using the obtained yellow pigment dispersion YP-6, followed by measurements and evaluations of the oil-based ink YI-6 in a manner substantially similar to those in Example 1, except that the oil-based ink YI-1 in Example 1 was replaced with the oil-based ink YI-6. The results of measurements and evaluations are shown in Table 1 below.

### <Composition of oil-based ink YI-6>

| | |
|---|---|
| · Yellow pigment dispersion YP-6 | 25.0 parts |
| · Ethylene glycol monobutyl ether acetate | 60.0 parts |
| (flash temperature: 83°C, boiling temperature: 192°C) | |
| · SUPER SOL FP30 (hydrocarbon based solvent) | 10.0 parts |
| (trade name, manufactured by Idemitsu Kosan Co., Ltd., non-aromatic paraffin-based solvent) | |
| · Elvacite 2013 (resin) | 5.0 parts |
| (trade name, manufactured by Du Pont; methyl methacrylate/butyl methacrylate copolymer) | |

### (Example 7)

Oil-based ink YI-7 was prepared by mixing components in the following composition, followed by measurements and evaluations of the oil-based ink YI-7 in a manner substantially similar to those in Example 1, except that the oil-based ink YI-1 in Example 1 was replaced with the oil-based ink YI-7. The results of measurements and evaluations are shown in Table 1 below.

### <Composition of oil-based ink YI-7>

| | |
|---|---|
| · Yellow pigment dispersion YP-1 | 25.0 parts |
| · Diethylene glycol diethyl ether | 34.0 parts |
| (flash temperature: 71°C, boiling temperature: 189°C) | |
| · Propylene carbonate (ester based solvent) | 36.0 parts |
| (flash temperature: 132°C, boiling temperature: 242°C) | |
| · Elvacite 2013 (resin) | 5.0 parts |
| (trade name, manufactured by Du Pont; methyl methacrylate/butyl methacrylate copolymer) | |

### (Example 8)

Yellow pigment dispersion YP-8 was prepared in a manner substantially similar to that in Example 1 except that diethylene glycol diethyl ether (flash temperature: 71°C, boiling temperature: 189°C) as a dispersing solvent in the yellow pigment dispersion YP-1 in Example 1 was replaced with propylene glycol monomethyl ether acetate (flash temperature: 46.5°C, boiling temperature: 146°C). Then, oil-based ink YI-8 having the following composition was prepared by using the obtained yellow pigment dispersion YP-8, followed by measurements and evaluations of the oil-based ink YI-8 in a manner substantially similar to those in Example 1, except that the oil-based ink YI-1 in Example 1 was replaced with the oil-based ink YI-8. The results of measurements and evaluations are shown in Table 1 below.

### <Composition of oil-based ink YI-8>

| | |
|---|---|
| · Yellow pigment dispersion YP-8 | 25.0 parts |
| · Propylene glycol monomethyl ether acetate | 60.0 parts |
| (flash temperature: 46.5°C, boiling temperature: 146°C) | |
| · SUPER SOL FP30 (hydrocarbon based solvent) | 10.0 parts |
| (trade name, manufactured by Idemitsu Kosan Co., Ltd., non-aromatic paraffin-based solvent) | |
| · Elvacite 2013 (resin) | 5.0 parts |
| (trade name, manufactured by Du Pont; methyl methacrylate/butyl methacrylate copolymer) | |

### (Example 9)

Oil-based ink YI-9 was prepared by mixing components in the following composition, followed by measurements and evaluations of the oil-based ink YI-9 in a manner substantially similar to those in Example 1, except that the oil-based ink YI-1 in Example 1 was replaced with the oil-based ink YI-9. The results of measurements and evaluations are shown in Table 1 below.

### <Composition of oil-based ink YI-9>

| | |
|---|---|
| · Yellow pigment dispersion YP-1 | 25.0 parts |
| · Dipropylene glycol monomethyl ether | 21.8 parts |
| (flash temperature: 74°C, boiling temperature: 190°C) | |
| · Diethylene glycol diethyl ether | 40.4 parts |
| (flash temperature: 71°C, boiling temperature: 189°C) | |
| · Tetraethylene glycol monobutyl ether | 7.8 parts |
| (flash temperature: 143°C, boiling temperature: 278°C) | |
| · Elvacite 2013- (resin) | 5.0 parts |
| (trade name, manufactured by Du Pont; methyl methacrylate/butyl methacrylate copolymer) | |

### (Example 10)

An oil-based ink was prepared and evaluated in a manner substantially similar to those in Example 1 except that the exemplified compound (Pig.-1) as pigment in Example 1 was replaced with the exemplified compound (Pig.-5, azo pigment represented by Formula (1)). The results of measurements and evaluations are shown in Table 1 below.

### (Example 11)

An oil-based ink was prepared and evaluated in a manner substantially similar to those in Example 1 except that the exemplified compound (Pig.-1) as pigment in Example 1 was replaced with the exemplified compound (Pig.-19, azo pigment represented by Formula (1)). The results of measurements and evaluations are shown in Table 1 below.

### (Comparative Example 1)

An oil-based ink was prepared and evaluated in a manner substantially similar to those in Example 1 except that the exemplified compound (Pig.-1) as pigment in Example 1 was replaced with Yellow Pigment E4GN (trade name, manufactured by Bayer AG, nickel complex-based azo pigment), and Solsperse 32000 (trade name, manufactured by Nippon Lubrisol, Ltd., Japan) in Example 1 was replaced with Solsperse 17000·(trade name, manufactured by Nippon Lubrisol, Ltd., Japan). The results of measurements and evaluations are shown in Table 1 below.

### (Comparative Example 2)

Evaluations were performed each in a manner substantially similar to that in Example 1 except that oil-based ink YI-1 in Example 1 was replaced with the following oil-based ink YI-11. The results of evaluation are shown in Table 1 below. Incidentally, oil-based ink YI-11 was prepared by mixing the components of the following composition.

### <Composition of oil-based ink YI-11>

| | |
|---|---|
| · Yellow pigment dispersion YP-1 | 25.0 parts |
| · Dipropylene glycol monomethyl ether | 19.3 parts |
| (flash temperature: 74°C, boiling temperature: 190°C) | |
| · Diethylene glycol diethyl ether | 33.8 parts |
| (flash temperature: 71°C, boiling temperature: 189°C) | |
| · Tetraethylene glycol monobutyl ether | 6.9 parts |
| (flash temperature: 143°C, boiling temperature: 278°C) | |
| · γ-Butyrolactone (lactone-based solvent) · | 15.0 parts |
| (flash temperature: 98°C, boiling temperature: 203°C) | |

### (Comparative Example 3)

Evaluations were performed each in a manner substantially similar to that in Example 1 except that oil-based ink YI-1 in Example 1 was replaced with the yellow ink (an aqueous pigment ink) exclusive to inkjet printer PM-4000 (trade name) manufactured by Seiko Epson Corporation. The results of evaluation are shown in Table 1 below.

Table 1

| | Pigment No. | Flash Temperature of Solvent | Particle Size of Pigment Dispersion | Ink Stability | Recoverability of ejection | Adhesion to vinyl chlorid resin sheet | Waterproofness | Cockling |
|---|---|---|---|---|---|---|---|---|
| Example 1 | Pig.-1 | ≥ 70°C | A | A | A | A | A | A |
| Example 2 | Pig.-18 | ≥ 70°C | A | A | A | A | A | A |
| Example 3 | Pig.-47 | ≥ 70°C | B | A | A | A | A | A |
| Example 4 | Pig.-1 | ≥ 70°C | A | A | A | A | A | A |
| Example 5 | Pig.-1 | ≥ 70°C | A | A | A | A | A | A |
| Example 6 | Pig.-1 | ≥ 70°C | A | A | A | A | A | A |
| Example 7 | Pig.-1 | ≥ 70°C | A | A | A | A | A | A |
| Example 8 | Pig.-1 | ≤ 70°C | A | A | B | A | A | A |
| Example 9 | Pig.-1 | ≥ 70°C | A | A | A | C | A | A |
| Example 10 | Pig.-5 | ≥ 70°C | A | A | A | A | A | A |
| Example 11 | Pig.-19 | ≥ 70°C | A | A | A | A | A | A |
| Comparative Example 1 | Pig.-E4GN | ≥ 70°C | C | B | C | B | A | A |
| Comparative Example 2 | Pig.-1 | ≥ 70°C | A | A | A | C | B | A |
| Comparative Example 3 | Yellow Ink exclusive to PM-4000 | ≥ 70°C | - | A | A | C | C | C |

As shown in Table 1, pigment dispersions having small particle size and high in dispersion stability were obtained in the Examples, and the oil-based inks prepared with these pigment dispersions were excellent in stability and good ejecting ability was maintained. Further, recording onto polyvinyl chloride resin could be done, and the adhesion of the image was good. When plain paper was used, the waterproofness of the images was good, and the occurrence of cockling could be suppressed. Contrary to this, in Comparative Example 1, dispersibility and stability were bad when the pigment was made to pigment dispersion, and ink stability and ejecting ability were inferior when the pigment dispersion was made to the oil-based ink. Further, in Comparative Example 2, recording property of an ink onto vinyl chloride was bad. In Comparative Example 3, where aqueous pigment ink was used, recording on polyvinyl chloride was difficult, and waterproofness of the image and cockling were inferior when plain paper was used.

The invention can provide the oil-based inkjet recording ink having recording property onto a polyvinyl chloride base material and excellent in ink stability and ejecting ability (including re-ejecting ability after termination of ejection (recoverability of ejection)).

According to the above constitutions of the invention, image recording may be done without being accompanied by cockling by ink ejection on plain paper, and image quality, image stability and drying property may also be improved. According to the constitution using the solvent having a flash temperature of 70°C or more and a boiling temperature of 150°C or more (preferably the vapor pressure at 20°C is 5 mmHg or lower) as the organic solvent, the dangerousness of flash ignition that has been considered to be inevitable to inks using organic solvents can also be suppressed.

The foregoing description of the exemplary embodiments of the present invention has been provided for the purposes of illustration and description. It is not intended to be exhaustive or to limit the invention to the precise forms disclosed. The embodiments were chosen and described in order to best explain the principles of the invention and its practical applications, thereby enabling others skilled in the art to understand the invention for various embodiments and with the various modifications as are suited to the particular use contemplated.

## Claims

1. An oil-based inkjet recording ink having a water content of 1% by mass or less comprising :
an azo pigment represented by the following Formula (1),
a polymer dispersant,
a resin. and
50% by mass or more of an organic solvent: 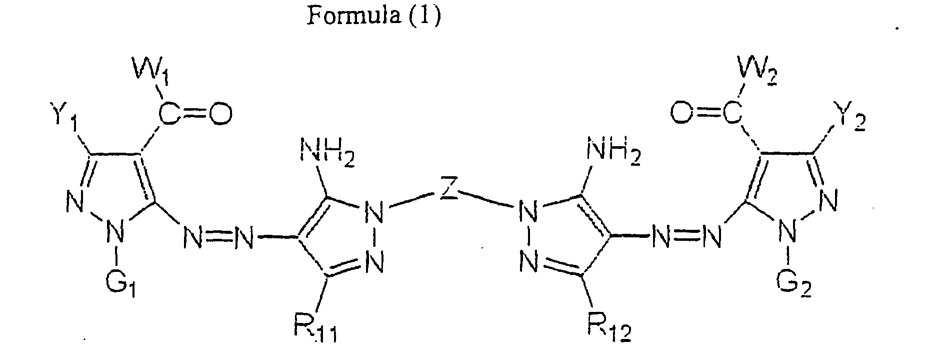
wherein, in Formula (1), Z represents a divalent group derived from a 5- to 8-membered heterocycle containing nitrogen atom(s); Y₁, Y₂, R₁₁, and R₁₂ each independently represent a hydrogen atom or a substituent; G₁ and G₂ each independently represent a hydrogen atom. an alkyl group, an aralkyl group, an alkenyl group, an alkynyl group, an aryl group or a heterocyclic group; and W₁ and W₂ each independently represent an alkoxy group, an amino group, a substituted amino group, an alkyl group or an aryl group.

2. The oil-based inkjet recording ink of claim 1, wherein, in Formula (1), W₁ and W₂ each independently represent an alkoxy group having 3 or less carbon atoms, an amino group, or an alkylamino group having 3 or less carbon atoms.

3. The oil-based inkjet recording, ink of claim 1 or claim 2, wherein, in Formula (1), G₁ and G₂ each independently represent an alkyl group having 3 or less carbon atoms.

4. The oil-based inkjet recording ink of any one of claims 1 to 3, wherein, in Formula (1), Z represents a divalent group derived from a 6-membered heterocycle containing nitrogen atom(s).

5. The oil-based inkjet recording ink of any one of claims 1 to 4, wherein, the azo pigment represented by Formula (1) is an azo pigment represented by the following Formula (21): 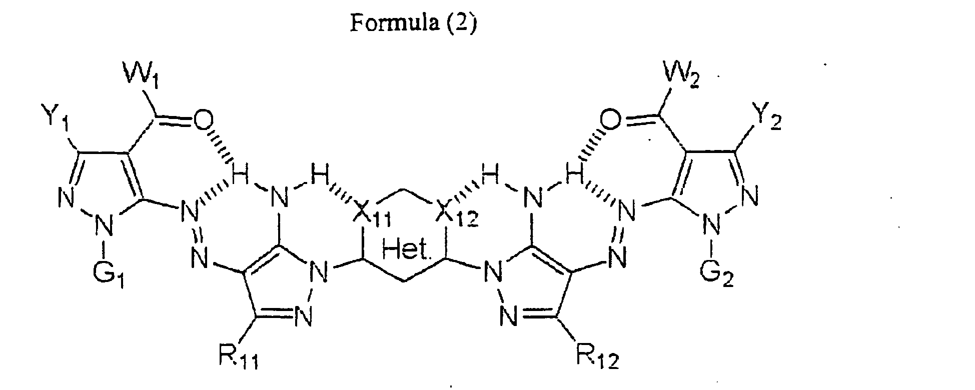 wherein, in Formula (2), Y₁, Y₂, R₁₁, and R₁₂ each independently represent a hydrogen atom or a substituent; G₁ and G₂ each independently represent a hydrogen atom, an alkyl group, an aralkyl group, an alkenyl group, an alkynyl group, an aryl group or a heterocyclic group; and W₁ and W₂ each independently represent an alkoxy group, an amino group, a substituted amino group, alkyl group or an aryl group; and X₁₁ and X₁₂ each independently represent a heteroatom in a divalent group (Het.) derived from a nitrogen-containing heterocyclic compound represented by Z in Formula (1).

6. The oil-based inkjet recording ink of any one of claims 1 to 5, wherein the polymer dispersant comprises a hydrophobic group in a molecule and is insoluble in water.

7. The oil-based inkjet recording ink of any one of claims 1 to 6, wherein at least one of the organic solvent is one selected from the group consisting of a polyoxyethylene glycol dialkyl ether represented by the following Formula (α); a polyoxyethylene glycol monoalkyl ether represented by the following Formula (β); a polyoxypropylene glycol monoalkyl ether represented by the following Formula (γ); a triethyl citrate; a hydrocarbon based solvent; and a lactone based solvent,
Formula (α): R²¹-(OC₂H₄)₁-OR²²,
wherein, in Formula (α), R²¹ and R²² each independently represent an alkyl group having 1 to 3 carbon atoms and may be the same or different from each other; and 1 denotes an integer of 2 to 4,
Formula (β): R³¹-(OC₂H₄)ₘ-OH,
wherein, in Formula (β): R³¹ represent an alkyl group haying 1 to 6 carbon atoms, and m denotes an integer of 3 to 6, and
Formula (γ): R⁴¹-(OC₃H₆)ₙ-OH.
wherein, in Formula (γ). R⁴¹ represents an alkyl group having 1 to 4 carbon atoms. and n denotes an integer of 2 to 3.

8. The oil-based inkjet recording ink of claim 7, wherein at least one of the organic solvent is a polyoxyethylene glycol dialkyl ether represented by Formula (α).

9. The oil-based inkjet recording ink of claim 7, wherein at least one of the organic solvent is one selected from the group consisting of a polyoxyethylene glycol monoalkyl ether represented by Formula (β); a polyoxypropylene glycol monoalkyl ether represented by Formula (γ); and a triethyl citrate.

10. The oil-based inkjet recording ink of claim 7. wherein at least one or the organic solvent is one selected from the group consisting of a hydrocarbon based solvent and a lactone based solvent.

11. The oil-based inkjet recording ink of any one of claims 1 to 10, wherein the resin is a (meth)acrylic resin.

12. The oil-based inkjet recording ink of claim 11, wherein the (meth)acrylic resin is a homopolymer of methyl methacrylate or a copolymer of methyl methacrylate and butyl methacrylate.

13. The oil-based inkjet recording ink of any one of claims 1 to 12, wherein a weight average moiecuiar weight of the resin is in a range of 5.000 to 100.000.

## Patentansprüche

1. Ölbasierte Tintenstrahlaufzeichnungstinte mit einem Wassergehalt von 1 Massen% oder weniger, die folgendes umfasst:
ein Azopigment der folgenden Formel (1) ein Polymerdispersionsmittel,
ein Harz und
50 % oder mehr eines organischen Lösungsmittels 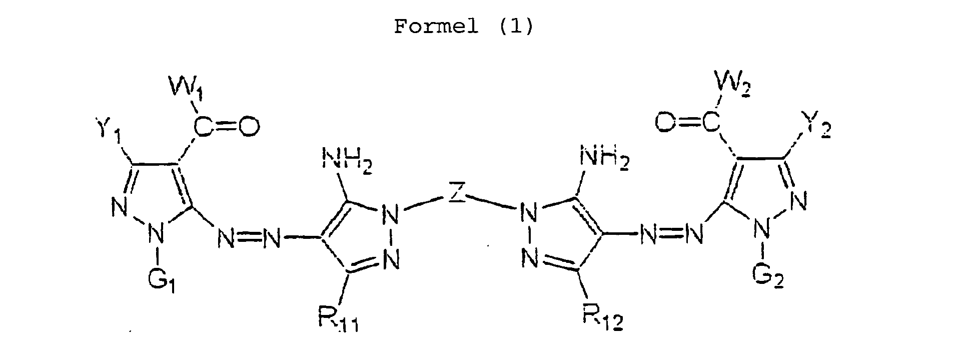
worin in Formel (1) Z eine divalente Gruppe ist, die von einem stickstoffatomhaltigen 5- bis 8-gliedrigen Heterozyklus abgeleitet ist; Y₁, Y₂, R₁₁ und R₁₂ jeweils unabhängig voneinander ein Wasserstoffatom oder ein Substituent sind; G₁ und G₂ jeweils unabhängig voneinander ein Wasserstoffatom, eine Alkylgruppe, eine Aralkylgruppe, eine Alkenylgruppe, eine Alkinylgruppe, eine Arylgruppe oder eine heterocyclische Gruppe sind;
und W₁ und W₂ jeweils unabhängig voneinander eine Alkoxygruppe, eine Amingruppe, eine substituierte Amingruppe, eine Alkylgruppe oder eine Arylgruppe sind.

2. Ölbasierte Tintenstrahlaufzeichnungstinte gemäß Anspruch 1, worin in Formel (1) W₁ und W₂ jeweils unabhängig voneinander eine Alkoxygruppe mit 3 oder weniger Kohlenstoffatomen, eine Amingruppe oder eine Alkylamingruppe mit 3 oder weniger Kohlenstoffatomen sind.

3. Ölbasierte Tintenstrahlaufzeichnungstinte gemäß Anspruch 1 oder Anspruch 2, worin in Formel (1) G₁ und G₂ jeweils unabhängig voneinander eine Alkylgruppe mit 3 oder weniger Kohlenstoffatomen sind.

4. Ölbasierte Tintenstrahlaufzeichnungstinte gemäß irgendeinem der Ansprüche 1 bis 3, worin in Formel (1) Z eine divalente Gruppe ist, die von einem stickstoffatomhaltigen 6-gliedrigen Heterozyklus abgeleitet ist.

5. Ölbasierte Tintenstrahlaufzeichnungstinte gemäß irgendeinem der Ansprüche 1 bis 4, worin das Azopigment der Formel (1) ein Azopigment der folgenden Formel (2) ist: 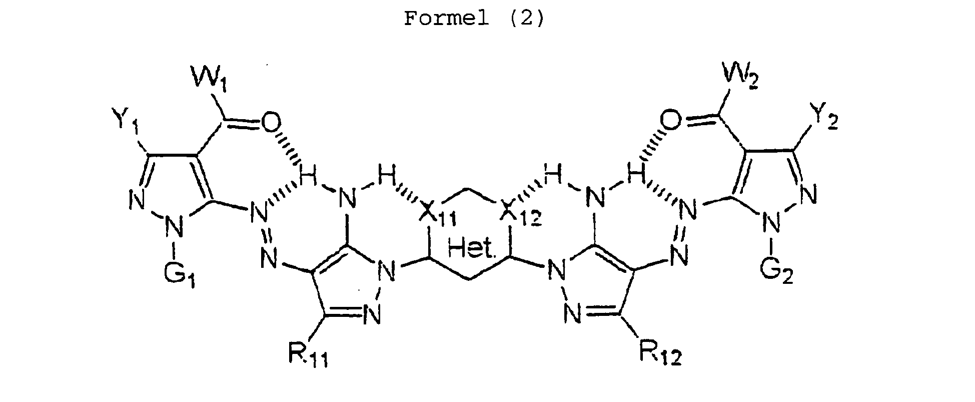 worin in Formel (2) Y₁, Y₂, R₁₁ und R₁₂ jeweils unabhängig voneinander ein Wasserstoffatom oder ein Substituent sind; G₁ und G₂ jeweils unabhängig voneinander ein Wasserstoffatom, eine Alkylgruppe, eine Aralkylgruppe, eine Alkenylgruppe, eine Alkinylgruppe, eine Arylgruppe oder eine heterocyclische Gruppe sind; und W₁ und W₂ jeweils unabhängig voneinander eine Alkoxygruppe, eine Amingruppe, eine substituierte Amingruppe, eine Alkylgruppe oder eine Arylgruppe sind; und X₁₁ und X₁₂ jeweils unabhängig voneinander ein Heteroatom in einer divalenten Gruppe (Het.) sind, die abgeleitet ist von einer stickstoffhaltigen heterocyclischen Verbindung, die durch Z in Formel (1) dargestellt ist.

6. Ölbasierte Tintenstrahlaufzeichnungstinte gemäß irgendeinem der Ansprüche 1 bis 5, worin das Polymerdispersionsmittel eine hydrophobe Gruppe in einem Molekül umfasst und unlöslich in Wasser ist.

7. Ölbasierte Tintenstrahlaufzeichnungstinte gemäß irgendeinem der Ansprüche 1 bis 6, worin mindestens eines der organischen Lösungsmittel ausgewählt ist aus einem Polyoxyethylenglycoldialkylether der folgenden Formel (α); einem Polyoxyethylenglycolmonoalkylether der folgenden Formel (β) ; einem Polyoxypropylenglycolmonoalkylether der folgenden Formel (γ) ; einem Triethylcitrat; einem kohlenwasserstoffbasierten Lösungsmittel; und einem lactonbasierten Lösungsmittel;
Formel (α) : R²¹-(OC₂H₄)₁-OR²²
worin in Formel (α) R²¹ und R²² jeweils unabhängig voneinander eine Alkylgruppe mit 1 bis 3 Kohlenstoffatomen, die gleich oder verschieden voneinander sein können sind, und 1 eine ganze Zahl von 2 bis 4 bedeutet;
Formel (β) : R³¹-(OC₂H₄)ₘ-OH
worin in Formel β R³¹ eine Alkylgruppe mit 1 bis 6 Kohlenstoffatomen ist und m eine ganze Zahl von 3 bis 6 bedeutet und
Formel (γ) : R⁴¹-(OC₃H₆)ₙ-OH
worin Formel (γ) R⁴¹ eine Alkylgruppe mit 1 bis 4 Kohlenstoffatomen ist und n eine ganze Zahl von 2 bis 3 bedeutet.

8. Ölbasierte Tintenstrahlaufzeichnungstinte gemäß Anspruch 7, worin mindestens eines der organischen Lösungsmittel ein Polyoxyethylenglycoldialkylether der Formel (α) ist.

9. Ölbasierte Tintenstrahlaufzeichnungstinte gemäß Anspruch 7, worin mindestens eines der organischen Lösungsmittel eines ist, das ausgewählt ist aus einem Polyoxyethylenglycolmonoalkylether der Formel (β), einem Polyoxypropylenglycolmonoalkylether der Formel (γ) und einem Triethylcitrat.

10. Ölbasierte Tintenstrahlaufzeichnungstinte gemäß Anspruch 7, worin mindestens eines der organischen Lösungsmittel eines ist, das ausgewählt ist aus einem kohlenwasserstoffbasierten Lösungsmittel und einem lactonbasierten Lösungsmittel.

11. Ölbasierte Tintenstrahlaufzeichnungstinte gemäß irgendeinem der Ansprüche 1 bis 10, worin das Harz ein (Meth)acrylsäureharz ist.

12. Ölbasierte Tintenstrahlaufzeichnungstinte gemäß Anspruch 11, worin das (Meth)acrylsäureharz ein Homopolymer oder ein Methylmethacrylat oder ein Copolymer eines Methylmethacrylat und Butylmethacrylat ist.

13. Ölbasierte Tintenstrahlaufzeichnungstinte gemäß irgendeinem der Ansprüche 1 bis 12, worin ein gewichtsgemitteltes Molekulargewicht des Harzes in einem Bereich von 5.000 bis 100.000 ist.

## Revendications

1. Encre d'enregistrement par jet d'encre à base d'huile, ayant une teneur en eau de 1 % en masse ou moins, comprenant :
un pigment azoïque représenté par la formule (1) suivante,
un dispersant polymère,
une résine, et
50 % en masse ou plus d'un solvant organique : 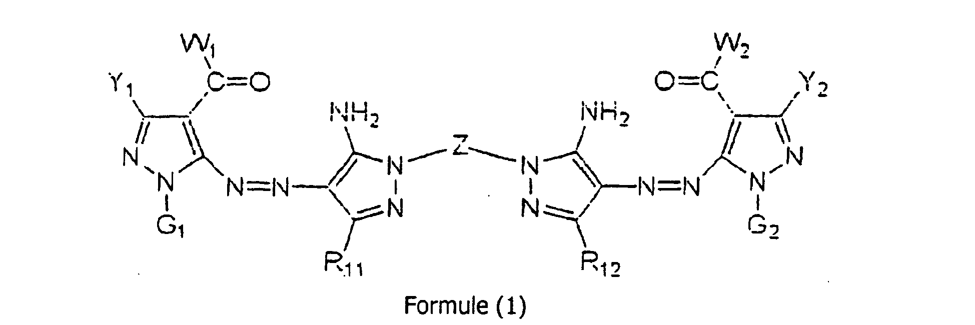
dans laquelle, dans la formule (1), Z représente un groupe divalent dérivé d'un hétérocycle à 5 à 8 chaînons contenant un ou plusieurs atomes d'azote ; chacun de Y₁, Y₂, R₁₁ et R₁₂ représente indépendamment un atome d'hydrogène ou un substituant ; chacun de G₁ et G₂ représente indépendamment un atome d'hydrogène, un groupe alkyle, un groupe aralkyle, un groupe alcényle, un groupe alcynyle, un groupe aryle ou un groupe hétérocyclique ; et chacun de W₁ et W₂ représente indépendamment un groupe alcoxy, un groupe amino, un groupe amino substitué, un groupe alkyle ou un groupe aryle.

2. Encre d'enregistrement par jet d'encre à base d'huile selon la revendication 1, dans laquelle, dans la formule (1), chacun de W₁ et W₂ représente indépendamment un groupe alcoxy ayant 3 atomes de carbone ou moins, un groupe amino, ou un groupe alkylamino ayant 3 atomes de carbone ou moins.

3. Encre d'enregistrement par jet d'encre à base d'huile selon la revendication 1 ou la revendication 2, dans laquelle, dans la formule (1), chacun de - G₁ et G₂ représente un groupe alkyle ayant 3 atomes de carbone ou moins.

4. Encre d'enregistrement par jet d'encre à base d'huile selon l'une quelconque des revendications 1 à 3, dans laquelle, dans la formule (1), Z représente un groupe divalent dérivé d'un hétérocycle à 6 chaînons contenant un ou plusieurs atomes d'azote.

5. Encre d'enregistrement par jet d'encre à base d'huile selon l'une quelconque des revendications 1 à 4, dans laquelle le pigment azoïque représenté par la formule (1) est un pigment azoïque représenté par la formule (2) suivante : 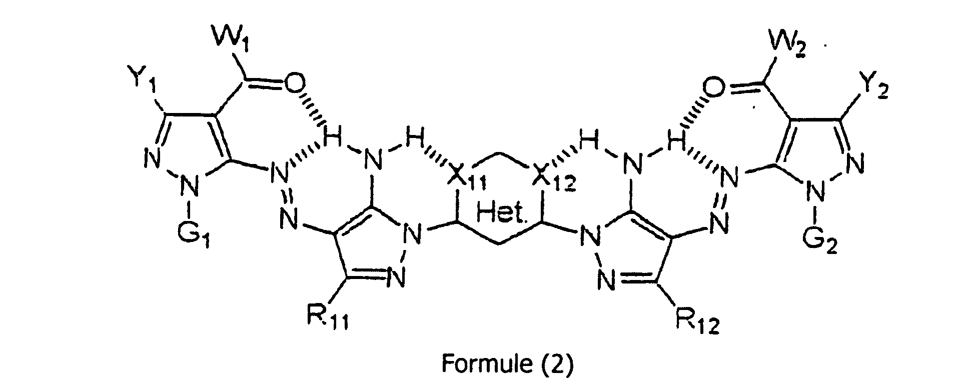 et dans laquelle, dans la formule (2), chacun de Y₁, Y₂, R₁₁ et R₁₂ représente indépendamment un atome d'hydrogène ou un substituant ; chacun de G₁ et G₂ représente indépendamment un atome d'hydrogène, un groupe alkyle, un groupe aralkyle, un groupe alcényle, un groupe alcynyle, un groupe aryle ou un groupe hétérocyclique ; et chacun de W₁ et W₂ représente indépendamment un groupe alcoxy, un groupe amino, un groupe amino substitué, un groupe alkyle ou un groupe aryle ; et chacun de X₁₁ et X₁₂ représente indépendamment un hétéroatome dans un groupe divalent (Het.) dérivé d'un composé hétérocyclique azoté représenté par Z dans la formule (1).

6. Encre d'enregistrement par jet d'encre à base d'huile selon l'une quelconque des revendications 1 à 5, dans laquelle le dispersant polymère comprend un groupe hydrophobe par molécule et est insoluble dans l'eau.

7. Encre d'enregistrement par jet d'encre à base d'huile selon l'une quelconque des revendications 1 à 6, dans laquelle au moins l'un des solvants organiques est choisi dans le groupe constitué par un éther dialkylique de polyoxyéthylèneglycol représenté par la formule (α) suivante ; un éther monoalkylique de polyoxyéthylèneglycol représenté par la formule (β) suivante ; un éther monoalkylique de polyoxypropylèneglycol représenté par la formule (γ) suivante ; un citrate de triéthyle ; un solvant hydrocarboné ; et un solvant à base de lactone,
Formule (α) : R²¹-(OC₂H₄)ₗ-OR²²,
où, dans la formule (α), chacun de R²¹ et R²² représente indépendamment un groupe alkyle ayant de 1 à 3 atomes de carbone et ils peuvent être mutuellement identiques ou différents ; et l désigne un entier de 2 à 4,
Formule (β) : R³¹-(OC₂H₄)ₘ-OH,
où, dans la formule (β), R³¹ représente un groupe alkyle ayant de 1 à 6 atomes de carbone, et m désigne un entier de 3 à 6, et
Formule (γ) : R⁴¹-(OC₃H₆)ₙ-OH
où, dans la formule (γ), R⁴¹ représente un groupe alkyle ayant de 1 à 4 atomes de carbone, et n désigne l'entier 2 ou 3.

8. Encre d'enregistrement par jet d'encre à base d'huile selon la revendication 7, dans laquelle au moins l'un des solvants organiques est un éther dialkylique de polyoxyéthylèneglycol représenté par la formule (α).

9. Encre d'enregistrement par jet d'encre à base d'huile selon la revendication 7, dans laquelle au moins l'un des solvants organiques est choisi dans le groupe constitué par un éther monoalkylique de polyoxyéthylène-glycol représenté par la formule (β) ; un éther monoalkylique de polyoxypropylèneglycol représenté par la formule (γ) ; et un citrate de triéthyle.

10. Encre d'enregistrement par jet d'encre à base d'huile selon la revendication 7, dans laquelle au moins l'un des solvants organiques est choisi dans le groupe constitué par un solvant hydrocarboné et un solvant à base de lactone.

11. Encre d'enregistrement par jet d'encre à base d'huile selon l'une quelconque des revendications 1 à 10, dans laquelle la résine est une résine (méth)acrylique.

12. Encre d'enregistrement par jet d'encre à base d'huile selon la revendication 11, dans laquelle la résine (méth)acrylique est un homopolymère de méthacrylate de méthyle ou un copolymère de méthacrylate de méthyle et de méthacrylate de butyle.

13. Encre d'enregistrement par jet d'encre à base d'huile selon l'une quelconque des revendications 1 à 12, dans laquelle la masse moléculaire moyenne en masse de la résine est située dans la plage allant de 5 000 à 100 000.
